# EUROPÄISCHE PATENTSCHRIFT

(11) **EP 1 861 462 B1**
(45) Veröffentlichungstag und Bekanntmachung des Hinweises auf die Patenterteilung: **05.09.2018**
(21) Anmeldenummer: 06723383.3
(22) Anmeldetag: 13.03.2006
(51) Int. Cl.: C08L 31/04, C04B 24/26, C04B 40/00, C09D 131/04, C09J 131/04, C04B 111/72, C04B 111/62, C04B 103/00, C04B 111/00

(54) **DISPERSIONSZUSAMMENSETZUNG FÜR HOCHFLEXIBLE, WASSERFESTE, HYDRAULISCH ABBINDENDE FLIESENKLEBER**
DISPERSION COMPOSITION FOR HIGHLY FLEXIBLE, WATERPROOF, HYDRAULICALLY BINDING TILE ADHESIVE
COMPOSITION DE DISPERSION POUR COLLES A CARRELAGES A PRISE HYDRAULIQUE, TRES FLEXIBLES ET RESISTANTES A L'EAU

(30) Priorität: 21.03.2005 DE 102005012986
(43) Veröffentlichungstag der Anmeldung: 05.12.2007
(73) Patentinhaber: Akzo Nobel Chemicals International B.V., 6824 BM Arnhem (NL)
(72) Erfinder: WICKI, Hans, 6102 Malters (CH); WILLIMANN, Hongli, 6340 Baar (CH); KEHRER, Ulf, Dr, 65795 Hattersheim (DE)
(74) Vertreter: Akzo Nobel Chemicals IP Group
(86) Internationale Anmeldenummer: PCT/EP2006/002280
(87) Internationale Veröffentlichungsnummer: WO 2006/099960

(56) Entgegenhaltungen:
- EP-A- 0 047 993
- EP-A- 0 466 409
- EP-A- 0 728 779
- EP-A- 0 959 084
- EP-A- 0 960 891
- EP-A- 1 262 465
- WO-A-95/09210
- RODRIGUEZ F ET AL: "Characterization of the glass transition using a microindenter", POLYMER PREPR, AMERICAN CHEMICAL SOCIETY, US, vol. 31, no. 1, 22 April 1989 (1989-04-22) , pages 268-269, XP009094728, ISSN: 0032-3934
- "Standard Test Method for TRANSITION TEMPERATURES OF POLYMERS BY THERMAL ANALYSIS", ASTM DESIGNATION, ASTM INTERNATIONAL, US, vol. 3418-82, 1 January 1982 (1982-01-01), pages 867-872, XP001537767,
- "DIN 53787. Prüfung von wässrigen Kunststoff-Dispersionen. Bestimmung der Mindest-Filmbildetemperatur und des Weisspunktes = Testing of polymer and copolymer aqueous dispersions; determination of the minimum temperature of film formation and the while point temperature", DEUTSCHE NORMEN. DIN N,, vol. 53787, 1 February 1974 (1974-02-01), pages 111-112, XP009098797,
- D. N. Schulz: "Water-Soluble Polymer Synthesis Theory and Practice", American Chemical Society ACS Symposium Series, vol. 467 18 July 1991 (1991-07-18), pages 57-73, DOI: 10.1021/bk-1991-0467.ch003 ISBN: 9780841221017 Retrieved from the Internet: URL:http://pubs.acs.org/doi/pdf/10.1021/bk -1991-0467.ch003 [retrieved on 2017-08-10]

## Beschreibung

Die vorliegende Erfindung betrifft eine in Wasser redispargierbare Dispersionspulver-zusammensetzung für hochflexible, wasserfeste, hydraulisch abbindende Fliesenkleber mit verlängerter Offener Zeit, und auch die Verwendung einer wässrigen Dispersions-zusammensetzung in hochflexiblen, wasserfesten, hydraulisch abbindenden Systemen.

In der neueren Zeit werden immer mehr Fliesenkleber mit erhöhten Anforderungen eingesetzt. Diese wurden nun anhand klar definierter Kriterien klassifiziert, sodass eine Einstufung möglichst differenziert, aber immer noch einfach gemacht werden kann. In der EN12004 werden zementhaltige Mörtel (Symbol "C") unterteilt in solche mit normalen Anforderungen (Symbol "1") und erhöhten Anforderungen, welche diese mit zusätzlichen Kennwerten erfüllen (Symbol "2"; Kennwert der Haftzugfestigkeiten gemessen nach EN 1348:1997 von mindestens 1.0 N/mm² nach allen vier Lagerungen). Eine weitere Kennzeichnung betrifft Mörtel mit verlängerter "Offener Zeit" (Symbol "E", Kennwert der Haftzugfestigkeit gemessen nach EN 1346 von mindestens 0.5 N/mm² nach einer Einlegezeit von mindestens 30 min.). In der EN12002 wird zudem die Verformung zementhaltiger Mörtel definiert. Dabei werden dünne zementhaltige Mörtelstreifen hergestellt (Masse 280 x 45 x 3 mm), welche nach Lagerung bei Beanspruchung mit einer Dreipunkt-Biegebelastung bis zum Bruch durchgebogen werden. Erfüllen nun die Probekörper eine Verformbarkeit zwischen 2.5 bis < 5 mm, werden sie mit "S1" eingestuft, bei einer Verformbarkeit von 5 mm oder mehr werden sie mit "S2" klassifiziert.

Während Fliesenkleber mit normalen Anforderungen (C1) schon seit längerer Zeit problemlos mit Dispersionspulver formuliert werden können, um polymermodifizierte Trockenmörtel zu erhalten, ist dies bei Fliesenklebern höherer Qualität nicht oder nur mit sehr grossem Formulierungsaufwand möglich. So können beispielsweise Fliesenkleber der Kategorie C2S2 und insbesondere der Kategorie C2ES2 in aller Regel nur durch Zugabe von hochwertiger wässriger Dispersion erreicht werden, was die Herstellung und Logistik von solchen 2 - Komponenten Produkten entsprechend verkompliziert. Dies trifft insbesondere für die Verlegung von Fliesenbelägen auf Terrassen, Estrichen mit Fussbodenheizung, jungen Zementuntergründen oder auf kritischen, klebefeindlichen Baumaterialien wie Isolationsplatten oder alten Fliesenbelägen zu, wo der Verarbeiter nur zu gerne Trockenmörtel ohne zusätzliche Dispersionskomponente verwenden möchte.

In der EP 654 454 A1 wird ein Kern-Schale-Polymerpulver beschrieben, welches mittels eines 2-Stufen-Prozesses hergestellt wird. Die zwei Polymerphasen zeigen eine Glasübergangstemperatur Tg von -11°C, und von +60 bis +80°C. Das Acrylatpolymer zeigt eine erhöhte Flexibilität. Adhäsionswerte werden nicht erwähnt. Zudem neigt der hohe Anteil an Carboxylgruppen, insbesondere bei hohen Polymereinsatzmengen, zu einer sehr instabilen Konsistenz und Verzögerung, welche vom Verarbeiter nicht akzeptiert wird.

In der EP 902 769 A1 werden flexible, kunststoffmodifizierte Baustoffmassen auf Basis von mineralischen Bindemitteln und einem oder mehreren Schutzkolloid-stabilisierten Vinylester-Ethylen-Copolymerisaten auf Basis Vinylacetat, Ethylen und C₅- bis C₁₈-Vinylestern beschrieben. Dadurch werden elastifizierte Baustoffmassen erhalten, deren Dehnfähigkeit den herkömmlichen emulgatorstabilisierten Styrol-Acrylat-Dispersionen ebenbürtig oder überlegen ist. Um die notwendige Flexibilität für Dichtungsschlämme zu erreichen, besitzen die eingesetzten Copolymerisate eine entsprechend niedrige Glasübergangstemperatur von -7°C bis -40°C. Haftzugsfestigkeiten, insbesondere bei höheren Polymergehalten sowie nach Frost-Tau- und nach Wärmelagerung, sind nicht erwähnt.

In der EP 1 134 255 A2 werden Polymerzusammensetzungen in Form von wässrigen Dispersionen oder in Wasser redispergierbaren Pulvern zur Flexibilisierung von Baustoffmassen, insbesondere Dichtungsschlämmen, beschrieben. Um die notwendige Flexibilisierung zu erhalten, wird unter anderem ein Gemisch von zwei verschiedenen Organosiliciumverbindungen, wobei mindestens eine in Salzform vorliegt, der Pulverzusammensetzung beigefügt. Dadurch wird eine deutliche Verbesserung der Reissdehnung von Dichtschlämmen-Schulterstegen gemessen. Haftzugsfestigkeiten, insbesondere bei höheren Polymergehalten nach Frost-Tau- und nach Wärmelagerung sind nicht erwähnt.

In der EP 757 065 A1 beschreibt heterogen aufgebaute Vinylacetat/ EthylenCopolymerisate in Dispersions- oder vorzugsweise in redispergierbarer Pulverform und deren Verwendung in Baustoffformulierungen, insbesondere in Dichtungsschlämmen. Dadurch sollen die Anforderungen an tieftemperaturbeständige Dichtungsschlämmen auch bei -30°C erfüllt werden können. Dazu werden Schutzkolloid stabilisierte Copolymerisate mit einer Glasübergangstemperatur von -40 bis +10°C hergestellt. Eine erste Copolymerisatphase enthält neben Vinylacetat mehr als 40 Gew.-% Ethylen und eine letzte Copolymerisatphase besteht neben Vinylacetat aus 5 bis 40 Gew.-% Ethylen. Die Produkte wurden für Dichtungsschlämme entwickelt, eignen sich aber weniger für Fliesenkleber. So wurden denn auch keine Haftzugfestigkeiten angegeben.

In den beiden Schriften EP 1 098 916 A1 und EP 1 102 793 A1 wird ein neuartiges Stabilisierungssystem beschrieben, welches mittels eines kationischen Monomeren in-situ hergestellt werden kann. Dabei ist zum Teil die Nasshaftfestigkeit sogar noch höher als die Trocken-Adhäsion. Das Erreichen einer erhöhten Flexibilität oder einer verbesserten Offenen Zeit wird hingegen nicht erwähnt.

Die US 4 385 152 beschreibt eine Mischung aus zwei verschiedenen Emulgatorstabilisierten Polymerkomponenten, wobei die erste Komponente ein Kern-Schale-Polymer ist, welche als filmbildender Zementüberzug verwendet wird. Die Kern-Schale-Dispersion wird mittels einer ersten Reaktionsmischung hergestellt, welche eine Glasübergangstemperatur von 50°C bis 150°C besitzt, während die zweite Reaktionsmischung eine solche von -10°C bis +10°C aufweist. Die zweite Dispersion weist bevorzugt einen hohen Anteil an Methylmethacrylat auf. Die gemittelten Glasübergangstemperaturen beider Dispersionen sind grösser als +25°C, wodurch Filmbildehilfsmittel zwingend notwendig sind. Die Polymermischungen eignen sich als Zementüberzüge und weniger als Mörtelzusatzmittel, da ein gewisser Anteil an (Meth)acrylsäure notwendig scheint, was sich sehr negativ auf die Mörteleigenschaften auswirken kann. Zudem liegen sie nur in wässriger Phase vor und können aufgrund ihres Stabilisierungssystems nicht einfach in Wasser redispergierbare Dispersionspulver überführt werden. Es werden keine Angaben bezüglich Flexibilität und Haftzugfestigkeit von polymermodifizierten Mörteln gemacht.

Die EP 702 057 A2 beschreibt eine Mischung eines Homo- oder Copolymerisates, welches eine Glasübergangstemperatur von mehr als 20°C besitzt und aus 85 bis 100 Gew.-% mindestens eines Vinylesters, bevorzugt Vinylacetat, besteht und eines Copolymerisates mit einer Glasübergangstemperatur von unterhalb 20°C, bestehend aus 45 bis 98 Gew.-% mindestens eines Vinylesters von Carbonsäuren mit 1 bis 18 Kohlenstoffatomen, sowie 2 bis 50 Gew.-% mindestens eines α-Monoolefins mit 1 bis 4 Kohlenstoffatomen. Die Dispersionsmischungen oder gegebenenfalls Dispersionspulver eignen sich als Klebstoffe zum Verkleben von porösen und semiporösen Substraten, insbesondere von Holz. Die Anwendung in hydraulisch abbindenden Systemen wird nicht erwähnt. Vinylacetat-Homopolymere und Vinylacetat-reiche Copolymere neigen in stark alkalischen Systemen zur Hydrolyse und eignen sich somit nicht für hochflexible, wasserfeste Fliesenkleber.

In der EP 1 110 978 A1 wird ein Verfahren zur Herstellung von Polyvinylalkoholstabilisierten Mischpolymerisaten auf Basis von Vinylester- und (Meth)Acrylsäureester-Comonomeren in Form wässriger Dispersionen und in Wasser redispergierbarer Disper-sionspulver beschrieben. Dabei werden 50 bis 100 Gew.-% der Vinylester-Monomere, mindestens 80 Gew.-% des Ethylens und 0 bis 40 Gew.-% der (Meth)AcrylatMonomere bei der Polymerisation vorgelegt. Dabei werden stabile und niederviskose Dispersionen und entsprechende redispergierbare, blockstabile Dispersionspulver erhalten, welche beim Einsatz in zementären Anwendungen eine voll befriedigende Viskositäts- bzw. Zementstabilität besitzen und die Zementabbindung nicht behindern. Die Reissfestigkeit und Reissdehnung von Polymer/ Mörtelfilmen ist im Wesentlichen vergleichbar mit einem Ethylen-Vinylacetat Dispersionspulver und weist keine wesentlichen Verbesserungen auf. Die Haftzugfestigkeiten insbesondere nach Nass- und Frost-Tau - Lagerung sind nur geringfügig höher als beim Ethylen-Vinylacetat Vergleichspulver. Die Anforderungen an die C2-Norm werden nicht erreicht - die Flexibilitätsanforderungen für die C2S2-Norm werden nicht erwähnt.

Die EP 1 262 465 A2 beschreibt die Verwendung von Dispersionen und in Wasser redispergierbaren Polymerpulvern auf Basis von Schutzkolloid stabilisierten Mischpolymerisaten aus Vinylestern, (Meth)Acrylsäureestern und gegebenenfalls Ethylen in Mörtelmassen. Dabei wird in einer ersten Stufe der Vinylesteranteil, gegebenenfalls in Gegenwart von Ethylen, bis zu einem Umsatz von 90 bis 100 Gew.-% polymerisiert. Anschliessend wird in einer zweiten Stufe der Anteil an Ester der (Meth)Acrylsäure zugegeben und polymerisiert. Dabei werden in Zug- Reissdehnungsversuchen von Polymer-Zementfilmen teilweise verbesserte Reissfestigkeiten gemessen. Haftzugfestigkeitswerte sind nicht - oder nur gering verbessert gegenüber dem erwähnten Stand der Technik. Die Anforderungen an die C2-Norm werden mit 4.5% Pulvereinsatzmenge erreicht, auch mit den Vergleichspulvern. Die Flexibilitätsanforderungen für die C2S2-Norm werden nicht erwähnt. Ein weiterer Nachteil von EP 1 110 978 A1 und EP 1 262 465 A2 ist das relativ aufwändige Polymerisationsverfahren, bei dem zunächst Vinylester und Ethylen copolymerisiert werden und anschliessend die (Meth)Acrylat Monomere. Da die Vinylester und insbesondere Ethylen sehr schlecht mit den (Meth)Acrylat Monomeren copolymerisieren, muss entweder vor deren Zugabe mit aufwändigen und zeitraubenden Verfahren die Restmonomermenge sehr stark reduziert werden, oder am Ende der Polymerisation mittels teuren physikalischen Methoden wie Dampfstrippen ein erhöhter Anteil dieser Monomere entfernt werden. Beide Möglichkeiten verteuern den Herstellprozess stark. Zudem muss für jedes unterschiedliche Verhältnis des (Meth)Acrylat Copolymeren zum Ethylen-Vinylacetat Copolymeren eine neue Dispersion entwickelt werden, was sehr aufwändig und für die nachfolgende Produktion sehr unvorteilhaft ist.

Es war nun die Aufgabe der vorliegenden Erfindung, eine Dispersionspulverzusammensetzung bereitzustellen, anhand derer ohne grösseren Formulierungsaufwand hochflexible, wasserfeste, hydraulisch abbindende Fliesenkleber formuliert werden können, welche die C2S2-, insbesondere die C2ES2-Anforderungen mit verlängerter Offener Zeit, erreichen. Zudem soll die Korrigierbarkeit einer im Mörtel eingelegten Fliese grösser als 30 Minuten sein. Um auch bei extremen und langen Nasslagerungsphasen und/ oder Frost-Tau-Zyklen noch gute Werte zu erhalten, soll der Abfall der Haftzugfestigkeit nach diesen Normlagerungen zur Haftzugfestigkeit nach Trockenlagerung jeweils nur etwa 50% oder weniger betragen. Zudem soll die erhöhte Flexibilität und Haftzugfestigkeit auch bei niedrigen Temperaturen gewährleistet sein. Dies bedingt auch eine entsprechend niedrige Mindestfilmbildetemperatur (MFT). Weiter soll es möglich sein, die Dispersionen mittels einer 1-Stufen-Polymerisation herzustellen, wobei diese mittels herkömmlicher Technologie in Dispersionspulver überführbar sein sollen. Insbesondere sollen auch ohne grösseren Aufwand Dispersionen mit niedrigem Anteil an flüchtigen organischen Komponenten (VOC) erhalten werden können. Neben einem niedrigen Restmonomeranteil beinhaltet dies auch, dass die erwähnten Eigenschaften ohne Zuhilfenahme von Koalesziermitteln erreicht werden können. Ein zusätzliches wichtiges Kriterium ist zudem eine hohe Flexibilität bei der Produktentwicklung sowie Produktmodifikation, d.h. dass ohne grösseren

Aufwand einfach mit bestehenden Rohstoffen und Halbfabrikaten neue Produkte hergestellt werden können.

Überraschenderweise wurde nun gefunden, dass dann, wenn mindestens zwei verschiedene Dispersionen miteinander im richtigen Verhältnis kombiniert werden, und diese Dispersionen gewissen engen Kriterien genügen, die Aufgabe auf einfache Art und Weise gelöst werden kann.

Die Aufgabe wurde gelöst mit einer in Wasser redispergierbaren Dispersionspulverzusammensetzung nach Anspruch 1. Die Dispersionpulverzusammensetzung ist erhältlich durch Trocknung einer wässrigen Dispersionszusammensetzung auf Basis von mindestens zwei verschiedenen wasserunlöslichen Emulsionspolymerisaten, sowie gegebenenfalls weiteren Additiven, wobei a) ein Emulsionspolymerisat A eine Glasübergangstemperatur T_{g} von 10°C bis 80°C und ein Emulsionspolymerisat B eine Glasübergangstemperatur T_{g} von-60°C bis +20°C besitzt, wobei die Differenz der Glasübergangstemperaturen T_{g} der Emulsionspolymerisate A und B mindestens 5 °C beträgt, b) die Emulsionspolymerisate A und B jeweils 0 bis 70 Mol-% Vinylacetat-Monomereinheiten, bezogen auf den jeweiligen Gesamtmonomeranteil der einzelnen Emulsionspolymerisate, enthalten, c) die Glasübergangstemperaturen T_{g} und die Gewichtsverhältnisse der Emulsionspolymerisate A und B so eingestellt werden, dass die Mindestfilmbildetemperatur gemäss DIN 53787 der 50%-igen wässrigen Dispersionszusammensetzung 15°C oder weniger beträgt, und d) die Monomere, Stabilisierungssysteme und gegebenenfalls die weiteren Additive der Dispersionszusammensetzung so ausgewählt werden, dass die Zementverträglichkeit gewährleistet ist, wobei die Zementverträglichkeit durch das Verhältnis der Zeit bestimmt wird, die eine Mischung von 10 g Zement in 190 g Wasser mit 1,0 g Dispersionszusammensetzung, bezogen auf den Feststoffgehalt, braucht, um eine transparente Wasserphase von 25% des Gesamtvolumens aus Wasser, Zement und Dispersions-zusammensetzung auszubilden, zur entsprechenden Zeit der gleichen Zement/ Wasser Mischung ohne Dispersionszusammensetzung, wobei das Verhältnis 0.3 : 1 oder grösser ist.

Das Emulsionspolymerisat A und das Emulsionspolymerisat B der wässrigen Dispersionszusammensetzung sind bezüglich der Arten der Copolymerisate keinerlei Einschränkungen unterworfen. So können beispielsweise Copolymerisate auf Basis von Ethylen-Vinylacetat, Ethylen-Vinylacetat-Vinylversatat, Ethylen-Vinylacetat-(Meth)Acrylat, Ethylen-Vinylacetat-Vinylchlorid, Vinylacetat-Vinylversatat, Vinylacetat-Vinylversatat-(Meth)acrylat, Vinylversatat-(Meth)acrylat, Rein(Meth)Acrylat, Styrol-Acrylat und/ oder Styrol-Butadien eingesetzt werden, wobei Vinylversatat ein verzweigter C₄- bis C₁₂- Vinylester ist, und die Polymerisate bevorzugt etwa 0-50 Gew.-%, insbesondere etwa 0-30 Gew.-% und ganz besonders bevorzugt etwa 0-10 Gew.-% an weiteren Comonomeren enthalten können.

Für die erfindungsgemässen Emulsionspolymerisate A und B ist der Gehalt an copolymerisiertem Vinylacetat jedoch wichtig. So darf er den Anteil von 70 Mol-% im jeweiligen Emulsionspolymerisat nicht übersteigen. Bevorzugt ist ein Vinylacetatgehalt von etwa 65 Mol-% oder weniger, insbesondere von etwa 60 Mol-% oder weniger, und ganz besonders bevorzugt von etwa 55 Mol-% oder weniger. Zu den erfindungsgemässen Emulsionspolymerisaten gehören auch Vinylacetat-freie Copolymerisate, sodass der Vinylacetatgehalt in dem Emulsionspolymerisat A und/ oder dem Emulsionspolymerisat B bevorzugt etwa 0 Mol-% beträgt. Oft sind jedoch Copolymerisate bevorzugt, welche einen Vinylacetatgehalt von bevorzugt etwa 5 Mol-% oder mehr, insbesondere von etwa 10 Mol-% oder mehr, und ganz besonders bevorzugt von etwa 20 Mol-% oder mehr enthalten.

Beim Emulsionspolymerisat A ist es zudem vorteilhaft, aber nicht zwingend, wenn etwa 2 bis 80 Gew.-%, bevorzugt etwa 5 bis 60 Gew.-% und insbesondere etwa 10 bis 50 Gew.-% (Meth)Acrylatmonomer enthalten sind. Ganz besonders bevorzugt ist ein Anteil von etwa 15 bis 35 Gew.-% (Meth)Acrylatmonomer. Dabei spielt es keine Rolle, ob die Homopolymerisate der eingesetzten (Meth)Acrylatmonomere eine hohe oder niedrige Glasübergangstemperatur T_{g} besitzen, solange die Glasübergangstemperatur T_{g} des Emulsionspolymerisates A im erfinderischen Bereich liegt.

Geeignete Monomerklassen zur Herstellung des Emulsionspolymerisates A und/ oder des Emulsionspolymerisates B sind zum Beispiel lineare oder verzweigte C₁- bis C₂₀-Vinylester, Ethylen, Propylen, Vinylchlorid, (Meth)Acrylsäure und deren lineare oder verzweigte C₁- bis C₂₀- Alkylester, (Meth)Acrylamid und (Meth)Acrylamid mit N-substituierten linearen oder verzweigten C₁- bis C₂₀- Alkylgruppen, Acrylnitril, Styrol, Styrol-Derivate, und/ oder Diene wie beispielsweise 1,3-Butadien.

Bevorzugte Vinylester sind lineare oder verzweigte C₁- bis C₁₂- Vinylester wie beispielsweise Vinylacetat, Vinylstearat, Vinylformiat, Vinylpropionat, Vinylbutyrat, Vinylpivalat, Vinyllaurat, Vinyl-2-ethylhexanoat, 1-Methylvinylacetat und/ oder C₉-, C₁₀- und/ oder C₁₁- Vinylversatat, Vinylpyrrolidon, N-Vinylformamid, N-Vinylacetamid sowie Vinylester der Benzoesäure und p-tert-Butylbenzoesäure, wobei insbesondere Vinylacetat, Vinyllaurat und/ oder Vinylversatat bevorzugt sind.

Bevorzugte C₁- bis C₁₂- Alkylgruppen der (Meth)Acrylsäureester und N-substituierten (Meth)Acrylamide sind Methyl-, Ethyl-, Propyl-, n-Butyl-, i-Butyl-, t-Butyl-, Hexyl-, Cyclohexyl-, 2-Ethylhexyl-, Lauryl-, Stearyl-, Norbornyl-, Polyalkylenoxid- und/ oder Polyalkylenglykolgruppen, insbesondere Methyl-, Butyl-, 2-Ethylhexylgruppen. Insbesondere sind Methylmethacrylat, n-Butylacrylat, t-Butylmethacrylat und 2-Ethylhexylmethacrylat bevorzugt.

Zudem können weitere Comonomere einpolymerisiert werden. Beispielsweise können Maleinsäureanhydrid, ungesättigte Dicarbonsäuren und deren verzweigte oder lineare C₁- bis C₂₀- Ester, insbesondere Itaconsäure, Maleinsäure und/ oder Fumarsäure sowie deren Ester, mehrfach ethylenisch ungesättigte Comonomere wie beispielsweise Dinvinyladipat, Diallylmaleat, Allylmethacrylat oder Triallylcyanurat, Divinylbenzol, Butandiol-1,4-dimethacrylat, Hexandioldiacrylat, Triethylenglykoldimethacrylat, funktionelle Vinyl- und/ oder (Meth)acrylat Monomere enthaltend Alkoxysilan-, Glycidyl-, Epihalohydrin-, Carboxyl-, Amin-, Hydroxyl- Ammonium-, und/ oder Sulfonsäuregruppen copolymerisiert werden. Bevorzugte funktionelle Monomere sind Hydroxypropyl(meth)acrylat, N-Methylolallylcarbamat, Methylacrylamidoglykolsäuremethylester, Glycidyl(meth)acrylat, Vinylylsulfonsäure, N-Methylol(meth)acrylamid, Acrylamidoglykolsäure, 2-Acrylamido-2-methyl-propan-sulfonsäure, (Meth)acryloxypropyltri(alkoxy)silan, Vinyltrialkoxysilan, Vinylmethyl-dialkoxysilane, wobei als Alkoxygruppen bevorzugt Methoxy-, Ethoxy- und/ oder iso-Propoxygruppen verwendet werden, Acetylacetoxyethyl(meth)acrylat, Diacetonacrylamid, N-[3-(Dimethylamino)-propyl]methacrylamid, N-[3-(Dimethyl-amino)ethyl]methacrylat, N-[3-(Trimethyl-ammonium)propyl]methacrylamidchlorid, und/ oder N,N-[3-Chloro-2-hydroxypropyl)-3-dimethylammoniumpropyl](meth) acrylamidchlorid. Der Anteil dieser Comonomere beträgt, bezogen auf den Gesamtmonomeranteil, bevorzugt etwa 0 bis 30 Gew.-%, insbesondere etwa 0 bis 20 Gew.-% und ganz besonders bevorzugt etwa 0.1 bis 10 Gew.-%, wobei darauf geachtet werden soll, dass der Anteil an freien Carboxylgruppen bevorzugt nicht höher als etwa 10 Gew.-%, insbesondere nicht höher als etwa 5 Gew.-%, und banz besonders bevorzugt nicht höher als etwa 3 Gew.-% ist.

Aus den eingesetzten Monomeren lässt sich jeweils die Glasübergangstemperatur T_{g} der hergestellten Copolymerisate, und somit der Emulsionspolymerisate, sowohl empirisch berechnen wie auch experimentell bestimmen. Anhand der bekannten Fox Gleichung (T.G. Fox, Bull. Am. Phy. Soc. (serII) 1, 123 (1956) und Ullmann's Enzyklopädie der Technischen Chemie, Bd. 19, 4. Auflage, Verlag Chemie, Weinheim, 1980, S. 17/ 18) können sie empirisch berechnet werden: 1/ T_{g} = x_{A}/ T_{gA} + x_{B}/ T_{gB} + ..... + xₙ/ T_{gn}, wobei x_{A}, x_{B} .... die Massenbrüche der eingesetzten Monomere A, B, ... (in Gew.-%) und T_{gA}, T_{gB}, .... die Glasübergangstemperaturen T_{g} in Kelvin der jeweiligen Homopolymerisate von A, B, ... sind. Diese sind beispielsweise in Ullmann's Encyclopedia of Industrial Chemistry, VCH, Weinheim, Vol. A21 (1992), S. 169 aufgelistet. Eine andere Möglichkeit, die Glasübergangstemperaturen T_{g} der Copolymerisate zu bestimmen, ist die experimentelle Bestimmung, beispielsweise mittels DSC, wobei die Mitteltemperatur herangezogen werden soll (midpoint temperature gemäss ASTM D3418-82). Es kann durchaus sein, dass die so bestimmten experimentellen Werte nicht genau mit den berechneten Werten übereinstimmen, da einerseits die Berechnung auf empirischen Grundlagen beruht und nicht für alle Monomerkombinationen gleich gut übereinstimmt und andererseits auch weitere Effekte wie das Molekulargewicht, eine mögliche Blockstruktur der Copolymerisate, eine gewisse Heterogenität sowie der Einfluss des Stabilisierungssystems eine wichtige Rolle für die effektive Glasübergangstemperatur T_{g} spielen. Bei grösseren Unterschieden zwischen den berechneten und experimentellen Werten gelten die experimentell ermittelten Werte.

Zur vorteilhaften Ausführung der Erfindung ist es wichtig, dass die Glasübergangstemperaturen T_{g} der Emulsionspolymerisate A und B innerhalb eines gewissen Bereiches liegen. Die Glasübergangstemperatur T_{g} des Emulsionspolymerisates A liegt im Bereich von 10°C bis 80°C, bevorzugt etwa 15°C bis 70°C, insbesondere etwa 20°C bis 50°C und ganz besonders bevorzugt etwa 25°C bis 40°C. Das Emulsionspolymerisat B besitzt eine Glasübergangstemperatur T_{g} von -60°C bis +20°C, bevorzugt etwa -50°C bis +10°C, insbesondere etwa -30°C bis +5°C und ganz besonders bevorzugt etwa -20°C bis 0°C.

In einer besonderen erfindungsgemässen Ausführung enthält das Emulsionspolymerisat A mindestens ein Monomer, dessen Homopolymerisat eine Glasübergangstemperatur T_{g} von bevorzugt grösser als etwa 40°C, insbesondere von grösser als etwa 50°C und ganz besonders bevorzugt grösser als etwa 60°C besitzt und welches zu mindestens etwa 2 Mol-%, bevorzugt zu mindestens etwa 5 Mol-%, insbesondere zu mindestens etwa 10 Mol-% und ganz besonders bevorzugt zu mindestens etwa 15 Mol-% im Emulsionspolymerisat A enthalten ist.

Zudem ist es wichtig, dass die Differenz der Glasübergangstemperaturen T_{g} der Emulsionspolymerisate A und B mindestens 5°C, bevorzugt mindestens etwa 10 °C, insbesondere mindestens etwa 15°C und ganz besonders bevorzugt mindestens etwa 20°C beträgt, wobei bei der Wahl der Gewichtsverhältnisse der beiden Emulsionspolymerisate A und B und deren Glasübergangstemperaturen T_{g} darauf geachtet werden muss, dass die Mindestfilmbildetemperatur (MFT) gemäss DIN 53787 der 50%-igen wässrigen Dispersionszusammensetzung 15°C oder weniger, bevorzugt etwa 10°C oder weniger beträgt und insbesondere etwa 5°C oder weniger beträgt.

Zur Ausführung der Erfindung können die Emulsionspolymerisate A und B mittels Emulsionspolymerisation, Microemulsions-polymerisation und/ oder inverser Emulsionspolymerisation erhalten werden. Diesbezüglich liegen keinerlei Einschränkungen vor. Zudem ist es möglich, dass die Emulsionspolymerisate A und B mit der gleichen Polymerisationsart, beispielsweise beide Emulsionspolymerisate mittels Emulsionspolymerisation, oder einer unterschiedlichen Polymerisationsart, hergestellt werden. Bevorzugt wird die Emulsionspolymerisation für die Emulsionspolymerisate A und B, wobei die Emulsionspolymerisate jedoch in jedem Fall voneinander getrennt hergestellt werden.

Nach einer speziellen Ausführungsform wird das Polymerisationsverfahren und/ oder die Wahl der Monomere so gesteuert wird, dass das Emulsionspolymerisat A und/ oder das Emulsionspolymerisat B eine heterogene Morphologie aufweisen. Dabei ist es möglich, dass durch die Wahl der Monomere zwei verschiedene Glasübergangstemperaturen T_{g} gemessen werden. In diesem Fall ist für die Zuteilung, ob es sich um ein Emulsionspolymerisat A oder B handelt, die Copolymerisatphase mit dem grösseren Anteil zu werten. Bei gleichen Anteilen gilt das arithmetische Mittel der verschiedenen gemessenen Glasübergangs-temperaturen T_{g}.

Für die erfindungsgemässe Herstellung der Emulsionspolymerisate A und B werden Schutzkolloide als Stabilisierungssysteme eingesetzt. Es ist möglich, dass nur ein Stabilierungssystem verwendet wird, oder aber dass verschiedene Stabilisierungssyteme miteinander kombiniert werden. Es ist auch möglich, dass beide Emulsionspolymerisate das gleiche oder unterschiedliche Stabilisierungssystem besitzen. Bevorzugt sind Stabilisierungssysteme, welche es erlauben, die Emulsionspolymerisate und/ oder die Dispersionszusammensetzung mittels Trocknung in Wasser redispergierbare Dispersionspulver und/ oder Dispersionspulverzusammensetzung zu überführen.

Schutzkolloiden können beispielweise ein oder mehrere Polyvinylpyrrolidone mit Molekulargewichten von 2000 bis 400'000, voll- oder teilverseifte und/ oder modifizierte Polyvinylalkohole mit einem Hydrolysegrad von bevorzugt etwa 70 bis 100 Mol-%, insbesondere von etwa 80 bis 98 Mol-%, und einer Höpplerviskosität in 4%iger wässriger Lösung von bevorzugt 1 bis 50 mPas, insbesondere von etwa 3 bis 40 mPas (gemessen bei 20°C nach DIN 53015), sowie Melaminformaldehyd-sulfonate, Naphthalinformaldehydsulfonate, Blockcopolymerisate von Propylenoxid und Ethylenoxid, Styrol-Maleinsäure- und/ oder Vinylether-Maleinsäure-Copolymerisate, sein. Höhermolekulare Oligomere können nicht-ionische, anionische, kationische und/ oder amphotere Emulgatoren sein, wie beispielsweise Alkylsulfonate, Alkylarylsulfonate, Alkylsulfate, Sulfate von Hydroxylalkanolen, Alkyl- und Alkylaryldisulfonate, sulfonierte Fettsäuren, Sulfate und Phosphate von polyethoxylierten Alkanolen und Alkylphenolen, sowie Ester von Sulfobernsteinsäure, quarternäre Alkylammonium-Salze, quarternäre Alkylphosphonium-Salze, Polyadditionsprodukte wie Polyalkoxylate, beispielsweise Addukte von 5 bis 50 Mol Ethylenoxid und/ oder Propylenoxid pro Mol an lineare und/ oder verzweigte C₆- bis C₂₂-Alkanole, Alkylphenole, höhere Fettsäuren, höhere Fettsäureamine, primäre und/ oder sekundäre höhere Alkyl-Amine, wobei die Alkylgruppe jeweils bevorzugt eine lineare und/ oder verzweigte C₆- bis C₂₂-Alkylgruppe ist. Ganz besonders bevorzugt sind synthetische Stabilisierungssysteme, insbesondere teilverseifte, gegebenenfalls modifizierte, Polyvinylalkohole, wobei ein oder mehrere Polyvinylalkohole zusammen eingesetzt werden können, gegebenenfalls mit geringen Mengen von geeigneten Emulgatoren. Die Einsatzmenge der Stabilisierungssysteme beträgt, bezogen auf den eingesetzten Monomeranteil, bevorzugt etwa 1 bis 30 Gew.-%, insbesondere etwa 3 bis 15 Gew.-%.

Nach einer speziellen Ausführungsform wird mindestens eines der Emulsionspolymerisate A oder B mittels eines Stabilisierungssystems hergestellt, welches durch radikalische Polymerisation von Monomeren beispielsweise in-situ erhalten wurde. Solche Monomere können beispielsweise (Meth)acrylsäure, Monomere mit Sulfonsäuregruppen und/ oder kationische Monomere sein, wie zum Beispiel in EP-A 1098916 und EP-A 1109838 beschrieben.

Die Wahl bezüglich dem zur Polymerisation notwendigen Initiatorsystem unterliegt ebenfalls keinerlei Einschränkungen. So können alle in den erwähnten Polymerisationsarten bekannten Initiatorsysteme verwendet werden. Bevorzugt werden jedoch Initiatoren verwendet, welche unter den Reaktionsbedingungen Radikale bilden. Dazu gehören thermische Initiatorsysteme, wie Persulfate, beispielsweise Kalium-, Natrium- oder Ammoniumpersulfat, wasser- und monomerlösliche Azoinitiatoren wie Azobisisobutyronitril, Azobiscyanovaleriansäure sowie 2,2'-Azobis(2-methylpropion-amidin)dihydrochlorid, Redox-Initiatorsysteme bestehend aus Oxidationsmitteln wie beispielsweise Wasserstoffperoxid, t-Butylhydroperoxid, t-Butylperoxid, Isopropylbenzolmonohydroperoxid, Cumolhydro-peroxid, t-Butylperoxopivalat, Dibenzoylperoxid, Bicyclohexylperoxydicarbonat, Dicetylperoxydicarbonat, und Reduktionsmitteln wie beispielsweise Natrium-, Kalium-, Ammonium- Sulfit und Bisulfit, Natium-, Kalium-, Zinkformaldehydsulfoxylat, sowie Ascorbinsäure, wobei gegebenenfalls auch Oxidationsmittel alleine verwendet werden können, welche mittels thermischer Zersetzung freie Radikale bilden können, sowie katalytische Initiatorsysteme wie beispielsweise das System H₂O₂/ Fe⁺²/ H⁺. Der Anteil an Initiatoren, bezogen auf den Monomeranteil, liegt bevorzugt zwischen etwa 0.01 und 5 Gew.-%, insbesondere zwischen etwa 0.1 und 3 Gew.-%.

Bei der Herstellung der Dispersionszusammensetzung muss mindestens ein Emulsions-polymerisat A und ein Emulsionspolymerisat B eingesetzt werden, wobei das Verhältnis der Feststoffanteile von Emulsionspolymerisat A zu den Feststoffanteilen von Emulsionspolymerisat B von 95 : 5 bis 5 : 95, und insbesondere etwa 80: 20 bis 20 : 80 beträgt.

Insbesondere bei der Auswahl der Monomere und der Stabilisierungssysteme ist darauf zu achten, dass die erhaltene Dispersionszusammensetzung, und gegebenenfalls auch die einzelnen Emulsionspolymerisate A und B eine gute Zementverträglichkeit aufweisen. Die Zementverträglichkeit wird durch das Verhältnis der Zeit bestimmt wird, die eine Mischung von 10 g Zement in 190 g Wasser mit 1,0 g Dispersionszusammensetzung, bezogen auf den Feststoffgehalt der Dispersionszusammensetzung, braucht, um eine transparente Wasserphase von 25% des Gesamtvolumens aus Wasser, Zement und Dispersions-zusammensetzung auszubilden, zur entsprechenden Zeit der gleichen Zement/ Wasser Mischung ohne Dispersionszusammensetzung, wobei das Verhältnis 0.3 : 1 oder grösser, bevorzugt etwa 0.5 : 1 oder grösser, insbesondere etwa 0.7 : 1 oder grösser, und ganz besonders bevorzugt etwa 0.9 : 1 oder grösser ist. Werden in Wasser redispergierbare Dispersionspulver eingesetzt, wird zur Bestimmung der Zementverträglichkeit das Dispersionspulver vorgängig mit Zement gemischt und nach der gleichen Methode getestet. Der Test wird bevorzugt in einem Messzylinder durchgeführt.

Der wässrigen Dispersionszusammensetzung kann ein Filmbildehilfsmittel und/ oder ein Koalesziermittel zugegeben werden, wobei der Anteil bevorzugt etwa 0 bis 5 Gew.-%, insbesondere etwa 0 bis 2 Gew.-%, bezogen auf den Copolymerisatgehalt, beträgt. Bevorzugt sind wässrige Dispersionszusammensetzungen und Dispersionspulverzusammensetzungen ohne zusätzliche Filmbildehilfsmittel und/ oder Koalesziermittel, da diese mit der Zeit aus dem Polymerisat heraus diffundieren können, was eine Versprödung des Polymerisats zur Folge haben kann. Aus diesem Grund ist die Emulsionspolymerisationskomponente B notwendig, um auch bei niedrigen Temperaturen eine entsprechende Flexibilität und Klebkraft zu gewährleisten.

Sehr vorteilhaft sind wässrige Dispersionszusammensetzungen mit einem niedrigen Anteil an organischen flüchtigen Komponenten (VOC), wobei als solche gelten, welche einen Siedepunkt von weniger als 250°C bei Normaldruck besitzen. Dazu gehören beispielsweise nicht reagierte Monomere, nicht polymerisierbare in den Monomeren enthaltene Verunreinigungen und Nebenprodukte der Polymerisation. Bevorzugt sind wässrige Dispersionszusammensetzungen mit einem VOC-Gehalt von weniger als etwa 5000 ppm, bevorzugt weniger als etwa 2000 ppm, insbesondere weniger als etwa 1000 ppm, und ganz besonders bevorzugt weniger als etwa 500 ppm, bezogen auf den Polymerisatgehalt.

Die in Wasser redispergierbare Dispersionspulverzusammensetzung ist erhältlich durch Trocknung der wässrigen Dispersionszusammensetzung, wobei gegebenenfalls weitere Additive vor, während und/ oder nach der Trocknung zugegeben werden können. Es ist möglich, dass die Dispersionspulver-zusammensetzung hergestellt wird, indem das Emulsionspolymerisat A, gegebenenfalls mit weiteren Additiven, und das Emulsionspolymerisat B, gegebenenfalls mit weiteren Additiven, getrennt oder aber gemeinsam getrocknet werden. Werden sie getrennt getrocknet, werden die einzelnen Dispersionspulver nach der Trocknung miteinander vermischt. Die Trocknung erfolgt bevorzugt mittels Sprühtrocknung, Gefriertrocknung, Fliessbetttrocknung, Walzentrocknung und/ oder Schnelltrocknung, wobei die Sprühtrocknung besonders bevorzugt ist.

Dabei ist es oft vorteilhaft, wenn bei der Herstellung der in Wasser redispergierbaren Dispersionspulverzusammensetzung dem Emulsionspolymerisat A und/ oder dem Emulsionspolymerisat B vor, während und/ oder nach der Trocknung ein oder mehrere wasserlösliche natürliche und/ oder synthetische Polymere bevorzugt in einer Menge von etwa 0.1 bis 50 Gew.-%, insbesondere etwa 1 bis 25 Gew.-%, und ganz besonders bevorzugt etwa 3 bis 15 Gew.-%, bezogen auf den Feststoffgehalt der zu trocknenden Emulsionspolymerisate, zugegeben werden. Bevorzugte wasserlösliche Polymere sind ein oder verschiedene Polyvinylpyrrolidone, Polysaccharidether, Dextrine und/ oder teilverseifte, gegebenenfalls modifizierte Polyvinylalkohole mit einem Hydrolysegrad von 80 bis 98 Mol-% und einer Höpplerviskosität in 4%iger wässriger Lösung von 1 bis 50 mPas (gemessen bei 20°C, DIN 53015).

Es können auch weitere Additive zur Dispersions- und/ oder Dispersionspulverzusammensetzung gegeben werden, wobei die Zugabe vor, während und/ oder nach der Trocknung erfolgen kann. Prinzipiell sind der Art der Additive keine Grenzen gesetzt. Flüssige Additive werden bevorzugt vor oder während der Trocknung zugegeben, können aber auch nachträglich auf das Pulver gesprüht werden. Pulverförmige Additive werden bevorzugt während oder nach der Sprühtrocknung zugegeben, können aber auch zur Dispersionsmischung zugegeben werde. Dabei spielt es keine Rolle, ob sie sich in der Dispersionsmischung lösen, aufquellen und/ oder in festem Zustand bleiben, solange sie unter den vorherrschenden Bedingungen nicht stark verklumpen und/ oder schnell sedimentieren. Es ist gegebenenfalls auch möglich, feste wasserlösliche oder wasserquellbare Additive zuerst in Wasser zu lösen oder zu quellen und als wässrige Lösung der Dispersions- und/ oder Dispersionspulverzusammensetzung zuzugeben.

Bevorzugte weitere Additive sind voll- und/ oder teilverseifte, und gegebenenfalls modifizierte, Polyvinylalkohole, Polyvinylpyrrolidone, pulverförmige und/ oder flüssige Entschäumer und/ oder Netzmittel, Alkyl-, Hydroxyalkyl- und/ oder Alkylhydroxyalkyl-Polysaccharidether wie Celluloseether, Stärkeether und/ oder Guarether, wobei die Alkyl- und Hydroxyalkylgruppe typischerweise eine C₁- bis C₄- Gruppe ist, synthetische Polysaccharide wie anionische, nonionische oder kationische Heteropolysaccharide, insbesondere Xanthan Gum oder Wellan Gum, Cellulosefasern, Dispergiermittel, Zementverflüssiger, Abbindebeschleuniger, Abbindeverzögerer, Luftporenbildner, Polycarboxylatether, Polyacrylamide, Polyalkylenoxide und Polyalkylenglykole, wobei die Alkylengruppe typischerweise eine C₂- und/ oder C₃- Gruppe ist, wobei auch Blockcopolymerisate darunter fallen, Hydrophobierungsmittel, wie Silane, Siloxane oder Fettsäureester, Verdickungsmittel, Füllstoffe, wie Carbonate, Silikate, gefällte Kieselsäuren, Puzzolane wie Metakaolin und/ oder latenthydraulische Komponenten, wobei der Anteil der weiteren Additive, bezogen auf den Polymerisatanteil, bevorzugt etwa 0.01 bis 250 Gew.-%, insbesondere etwa 0.1 bis 100 Gew.-%, und ganz besonders bevorzugt etwa 1 bis 25 Gew.-% beträgt.

Die Dispersions- und/ oder Dispersionspulver-zusammensetzungen werden bevorzugt in hydraulisch abbindenden Gips- und/ oder zementären Mörteln eingesetzt, können aber auch in pastösen Klebern Verwendung finden, die keine oder nur eine geringe Menge an hydraulisch abbindenden Anteilen hat. Die Einsatzmengen betragen auf den Trockenmörtelanteil bevorzugt etwa 0.1 bis 100 Gew.-%, insbesondere etwa 0.5 bis 50 Gew.-%, bezogen auf den Polymerisatgehalt der Dispersions- und/ oder Dispersionspulverzusammensetzung. Obwohl die Dispersionszusammensetzung und/ oder Dispersionspulverzusammensetzung in hochflexiblen, wasserfesten, hydraulisch abbindenden Fliesenklebern mit einem typischen Polymerisatgehalt von bevorzugt etwa 5 bis 30 Gew.-%, insbesondere etwa 7 bis 15 Gew.-%, bezogen auf den Trockenmörtel eingesetzt werden, können sie auch in Systemen verwendet werden, welche einen wesentlich kleineren Polymerisatgehalt enthalten, wie beispielsweise etwa 0.1 bis 7 Gew.-%, bevorzugt etwa 0.3 bis 5 Gew.-% und insbesondere etwa 0.5 bis 3.5 Gew.-%.

Die wässrige Dispersionszusammensetzung wird bevorzugt bei der Herstellung von sogenannten 2-Komponenten Systemen verwendet, bei denen einerseits ein Trockenmörtel, welcher gegebenenfalls zusätzlich eine Dispersionspulverkomponente enthalten kann, und andererseits eine wässrige Dispersionskomponente auf der Baustelle mit Wasser zusammen gemischt werden. Eine andere Verwendungsform sind pastöse Kleber, welche gegebenenfalls vor der Anwendung mit Zement und/ oder Gips vermischt werden können.

Die erfindungsgemässe Dispersionspulverzusammensetzung wird bevorzugt bei der Herstellung der Trockenmörtel diesen zugemischt, sodass alleine durch Anrühren mit Wasser ein polymervergütetes, hydraulisch abbindendes System erhalten wird. Werden die Emulsionspolymerisate A und B getrennt getrocknet, so können sie entweder anschliessend zur erfindungsgemässen Dipsersionspulver-zusammensetzung gemischt werden, oder aber als Einzelkomponenten dem Mörtel getrennt zugegeben werden. Eine weitere spezielle Ausführungsform ist, dass ein Dispersionspulver, basierend auf einem Emulsionspolymerisat A oder B, dem Trockenmörtel zugegeben wird, und beim Anrühren mit Wasser noch das Emulsionspolmyerisat B oder A in Dispersionsform zugegeben wird.

Bevorzugte, aber nicht ausschliessliche Anwendungsgebiete der wässrigen Dispersions- und/ oder Dispersionspulverzusammensetzung sind Fliesenkleber, Vollwärmeschutzmörtel, Nivelliermassen, Reparaturmörtel, Gips- und/ oder Kalk- und/ oder Zement-Putzen, Fugenmörtel, Dichtungsschlämme, Spachtelmassen, Plywood-Mörtel, Tapetenkleister, Mörtel für Haftbrücken, Parkettklebstoffe, Grundierungen, Klebstoffe zur Verklebung von Holz, Karton und/ oder Papier, und/ oder Pulverfarben.

Die Erfindung wird anhand der nachfolgenden Beispiele erläutert. Emulsionspolymerisat und Dispersion werden jeweils als Synonym verwendet.

### Beispiel 1:

Die Dispersion A (Disp. A) und die Vergleichsdispersion V-A (Disp. V-A) wurden auf bekannte Weise in einem 2-Liter-Glasreaktor im Semi-Batch-Verfahren hergestellt, wobei als Stabilisierungssystem Polyvinylalkohol mit einem Hydrolysegrad von 88 Mol-% verwendet wurde, welcher als wässrige Phase vorgelegt wurde. Die Dispersion B (Disp. B) und die Vergleichsdispersion V-B (Disp. V-B) wurden in einem 8-Liter Rührautoklaven mit dem gleichen Stabilisierungssystem nach dem gleichen Verfahren hergestellt. Die Reaktionstemperaturen waren jeweils zwischen 78 und 90°C und die Monomere wurden während insgesamt 3 bis 4 Stunden zudosiert.

Die Vergleichsdispersion C (Disp. V-C) wurde gemäss Beispiel 1 von EP 1 262 465 B1 in einem 8-Liter Rührautoklaven hergestellt.

**Tabelle 1: Monomerzusammensetzung und Eigenschaften der nachfolgend verwendeten Emulsionspolymerisate. Die in EP 1 262 465 B1 angegebenen Messwerte von Disp. V-C sind in Klammer erwähnt.**

| | **Disp. A** | **Disp. B** | **Disp. V-A** | **Disp. V-B** | **Disp. V-C** | |
|---|---|---|---|---|---|---|
| **Monomere (Mol%)** | | | | | Stufe 1 80 Gew% | Stufe 2 20 Gew% |
| Vinyl acetat | 64.5 | 53.6 | 87.3 | 74.5 | 51.2 | |
| VeoVa 9 * | 18.1 | | | | | |
| VeoVa 10 * | | | 12.7 | | | |
| Ethylen | | 46.4 | | 25.5 | 48.8 | |
| Butylacrylat | 17.4 | | | | | |
| Methylmethacrylat | | | | | | 100 |
| FK ** [Gew.-%] | 51 | 53 | 49 | 55 | 54 | |
| Visk *** [mPas] | 745 | 720 | 1865 | 1775 | 965 (300) | |
| Restmonomergehalte [ppm] | 847 | 128 | 385 | 102 | >4000 (<1000) | |
| T_{g} (calc.) [°C] | 23 | -9 | 22 | 12 | -12 | 105 |
| T_{g, mid} (exp.) [°C] | 20 | 2 | 30 | 19 | 8 (1) ****** | |
| MFT [°C] **** | 8 | 0 | 15 | 3 | 0 | |
| ZVK ***** | 0.9 | 0.9 | 0.9 | 1.0 | 0.8 | |

| | | | | | | |
|---|---|---|---|---|---|---|
| * VeoVa 9 und VeoVa 10 sind die Handelsnamen der Firma "Resolution" der C₉-respektive C₁₀- Vinylversatate. ** FK bedeutet Festkörpergehalt. *** Mit Visk. wird die Brookfieldviskosität, gemessen bei 20 rpm mit Spindel 3 angegeben. **** Die Mindestfilmbildetemperatur (MFT) wurde gemäss DIN 53787 gemessen ***** ZVK steht für die Zementverträglichkeit (siehe Text). Die Emulsionspolymerisate wurden unverdünnt im Versuch eingesetzt. ****** Wird die Glasübergangstemperatur als einphasiges Terpolymer berechnet, beträgt die T_{g} (calc.) +6 °C. | | | | | | |

Die erhöhten Restmonomere der Disp. V-C zeigen deutlich die Schwierigkeit auf, die eine solche 2-Stufen Polymerisation mit sich bringt. Da Restmonomere der ersten Stufe (Vinylacetat und Ethylen) kaum mit Methylmethacrylat polymerisieren, müssen diese vor oder nach der zweiten Polymerisationsstufe mittels einer aufwendigen Methode entfernt werden, oder aber es braucht eine längere Verweilzeit vor der Zugabe der zweiten Monomerstufe. Beides ist unvorteilhaft.

### Beispiel 2:

Die Herstellung der in Wasser redispergierbaren Dispersionspulver erfolgte wie in der Literatur vielfach beschrieben. Im Speziellen wurden den Emulsionspolymerisaten und den wässrigen Dispersionszusammensetzungen vor der Sprühtrocknung jeweils 7.5 Gew.-% eines Polyvinylalkohols mit einem Hydrolysegrad von 88 Mol% und einer Höpplerviskosität von 4 mPas beigemischt. Nach der erfolgreichen Sprühtrocknung wurden die Pulver mit 10 Gew.-% eines handelsüblichen Carbonates versetzt.

**Tabelle 2: Hergestellte Dispersionspulver und deren Gehalt an Emulsionspolymerisaten, bezogen auf die Gesamtmenge an Dispersionen.**

| **Dispersion [Gew.- %]** | **DP A** | **DP B** | **DP 1** | **DP V-1** | **DP V-2** |
|---|---|---|---|---|---|
| Disp. A | 100 | | 50 | | |
| Disp. B | | 100 | 50 | | |
| Disp. V-A | | | | 50 | |
| Disp. V-B | | | | 50 | |
| Disp. V-C | | | | | 100 |
| MFT [°C] * | 10 | 0 | 0 | 5 | 0 |
| Redispergierbarkeit | gut | gut | gut | gut | gut |
| ZVK ** | 1.2 | 0.9 | 1.1 | 1.4 | 1.1 |

| | | | | | |
|---|---|---|---|---|---|
| * Die Mindestfilmbildetemperatur (MFT) wurde gemäss DIN 53787 von der 50%-igen wässrigen Redispersion bestimmt. ** ZVK steht für die Zementverträglichkeit (siehe Text). | | | | | |

Die Werte zeigen deutlich, dass die in Wasser redispergierbaren Dispersionspulver und Dispersionspulverzusammensetzungen eine gute Redispergierbarkeit sowie eine gute Zementverträglichkeit besitzen.

Die Tabelle macht zudem die Flexibilität und Einfachheit deutlich, anhand der nur durch Variation der Verhältnisse an Emulsionspolymerisat A und B eine neue Dispersionszusammensetzung, respektive eine neue Dispersionspulver-zusammensetzung erhalten werden kann. Dem Fachmann ist klar, dass dadurch auch die Eigenschaften im Mörtel einfach den spezifischen Anforderungen angepasst werden können. Mit der Disp. V-C und DP V-2 ist dies nicht möglich.

### Beispiel 3:

Jeweils 12.0 Gewichtsteile der in Beispiel 2 angegebenen Dispersionspulver und Dispersionspulverzusammensetzungen wurden mit 88.0 Gewichtsteilen einer zementären Fliesenkleber-Rezeptur, bestehend aus 53.4 Gew.-% Quarzsand (0,1 - 0,3 mm), 44.4 Gew.-% Portlandzement CEM I 52,5 R, 1.6 Gew.-% Calciumformiat und 0.6 Gew.-% Celluloseether (Viskosität als 2% wässrige Lösung: 10'000 mPas) vermischt. Der Anmachwassergehalt, bezogen auf die Gesamtmenge der Trockenmischung, wurde so eingestellt, dass das Abrutschmass nach EN 1308 kleiner als 1 mm ist.

Für die anwendungstechnischen Prüfungen wurden jeweils 300 g Trockenmörtelmischung vorgelegt, unter Rühren die angegebene Menge Anmachwasser zugegeben und während 60 Sekunden mit einem 60mm Propellerrührer mit einer Geschwindigkeit von ca 950 Upm angerührt. Dabei wurde der Mörtel bezüglich Anrührverhalten (Knollenbildung und Benetzbarkeit) beurteilt. Nach einer Reifezeit von 3 Minuten wurde der Mörtel von Hand nochmals kurz aufgerührt, wobei die Konsistenz (gut, mittel, schlecht) beurteilt wurde.

Zur Messung der Haftzugfestigkeiten und der Offenen Zeit wurde pro Lagerung auf eine Betonplatte nach einem 0-Abstrich der Mörtel mit einem 6x6x6mm Kammspachtel im 60°-Winkel appliziert. Nach einer Einlegezeit (EZ) von 5 Minuten (Haftzugfestigkeiten) respektive 30 Minuten (Offene Zeit, OT) wurden 5x5 cm Fliesen von Hand ins Mörtelbett eingelegt und 30 Sekunden lang mit 2 kg beschwert. Die Messung der Haftzugfestigkeiten (gemäss CEN EN 1348) erfolgte mit Steinzeugfliesen nach der jeweiligen Lagerung ("T" - Trockenlagerung: 28 Tage bei 23°C und 50% relativer Feuchtigkeit (RF); "N" - Nasslagerung: 7 Tage trocken gelagert und anschliessend 21 Tage im Wasserbad); "FT" - Frost-Tau-Lagerung: 7 Tage bei 23°C und 50% RF, 21 Tage im Wasserbad, 25 Frost-Tau-Wechsel-Zyklen mit je 2 Stunden Frostlagerung gefolgt von 2 Stunden Wasserlagerung; "W" - Wärmelagerung: 28 Tage bei 23°C und 50% RF, 14 Tage bei 70°C und 1 Tag bei 23°C und 50% RF; wobei mit N/T und FT/T auch die Haftzugfestigkeit der Nass- und Frost-Tau-Lagerung in Prozent der Trockenlagerung angegeben ist) und die Offene Zeit mit einer Einlegezeit von 30 Minuten (mit Steingutfliesen, gemäss CEN EN 1346) wurde nach 28 Tagen Trockenlagerung ermittelt. Die Horizontale Deformation wurde gemäss EN12002 bestimmt, wobei die Probekörper bei 23°C gelagert wurden. Die relative Feuchtigkeit wurde für die ersten 14 Tage auf 100% und für die nächsten 14 Tage auf 50% eingestellt. Zur Bestimmung der Korrigierbarkeit nach DIN 18156 Teil 3 wurde der angerührte Mörtel zunächst wie bei Haftzugfestigkeitstests auf eine Betonplatte appliziert. Die eingedrückte Steinzeugfliese wurde jedoch nach fünf Minuten von Hand leicht um einen 45° Winkel in eine Richtung und wieder zurück gedreht. Nach weiteren fünf Minuten wurde dies sooft wiederholt, bis die Fliese abgefallen ist. Die angegebene Zeit entspricht der Zeit, bei der die Fliese das letzte mal ohne abzufallen gedreht werden konnte.

**Tabelle 3: Anwendungstechnische Eigenschaften einer einfachen Fliesenkleber-Rezeptur mit einer Einsatzmenge von jeweils 12.0 Gew.-% der hergestellten Dispersionspulver und Dispersionspulver-zusammensetzungen. Die Abkürzungen sind im Text erklärt.**

| | | **DP A** | **DP B** | **DP 1** | **DP V-1** | **DP V-2** |
|---|---|---|---|---|---|---|
| Anmachwassergehalt | [Gew.-%] | 24 | 23 | 24 | 24 | 23 |
| Anrührverhalten | | gut | gut | gut | gut | gut |
| Konsistenz | | gut | gut | gut | gut | gut |
| Haftzugfestigkeiten [N/mm²] | T; [N/mm²] | 2.59 | 1.96 | 2.28 | 2.47 | 2.66 |
| | N; [N/mm²] | 1.13 | 1.19 | 1.09 | 0.80 | 1.21 |
| | N/T; [%] | 44 | 60 | 48 | 32 | 45 |
| | FT; [N/mm²] | 1.22 | 0.94 | 1.17 | 0.84 | 0.99 |
| | FT/T; [%] | 47 | 48 | 51 | 34 | 37 |
| | W; [N/mm²] | 2.49 | 2.25 | 2.32 | 2.38 | 2.36 |
| Offene Zeit | [N/mm²] | 1.05 | 0.46 | 0.65 | 0.52 | 0.29 |
| Korrigierbarkeit | [min] | 40 | 20 | 35 | 20 | 25 |
| Horizontale Deformation | [mm] | 4.86 | 4.58 | 4.79 | 4.91 | 5.38 |

Die Werte der Tabelle 3 zeigen deutlich, dass die erfinderische Dispersionspulverzusammensetzung DP 1 deutliche Vorteile gegenüber den anderen Dispersionspulver oder Dispersionspulverzusammensetzungen aufweist. So werden die Normen C2S2- und C2ES2- meist problemlos erfüllt. Der etwas knappe Wert der Horizontalen Deformation kann leicht durch Erhöhung der Polymermenge erreicht werden (vgl. Tabelle 4). Die guten Werte der Offenen Zeit wird durch die lange Korrigierbarkeit unterstrichen. Die Dispersionspulver-zusammensetzung DP V-1 mit den gegenüber dem erfinderischen Bereich deutlich zu hohen Vinylacetatgehalten zeigt zwar eine gute Haftzugfestigkeit nach Trocken- und Wärmelagerung. Nach der Nass- und der Frost-Tau-Lagerung fallen die Werte jedoch unterhalb den von der Norm geforderten Wert von 1.0 N/mm². Da zudem die Haftzugfestigkeiten nach der Nass- und Frost-Tau-Lagerung nur 32 respektive 34% der Trockenlagerung sind, und somit der Abfall zum Wert nach Trockenlagerung sogar deutlich über den geforderten 50% liegt (68% und 66%), eignen sich diese Dispersionspulverzusammensetzungen nicht für die Anwendung bei C2S2-Fliesenklebern. Obwohl die Offene Zeit gute Werte zeigt, ist die Korrigierbarkeit eher niedrig. Ähnliches gilt für das DP V-2, welches auf der heterogenen Ethylen-Vinylacetat-Methylmethacrylat Dispersion beruht. Zwar werden die Haftzugfestigkeiten gemäss C2S2-Norm erfüllt, der Abfall der Haftzugfestigkeiten nach der Nass- und Frost-Tau-Lagerung zur Haftzugfestigkeit nach Trockenlagerung ist aber ähnlich schlecht (nur 45% und 37% des Trockenwertes). Zudem genügt der Wert der Offenen Zeit (0.29 N/mm²) deutlich nicht den geforderten 0.5 N/mm² der C2ES2-Norm. Auch die Korrigierbarkeit ist fällt gegenüber dem erfinderischen DP 1 deutlich ab.

Werden die Dispersionen Disp. A und Disp. B alleine zu den Dispersionspulver DP A und DP B gesprüht, werden auch nicht alle Anforderungen erfüllt. Die Haftzugfestigkeiten, und insbesondere die Werte der Offenen Zeit des Dispersionspulvers DP A erfüllen klar die geforderten Werte der C2S2- und C2ES2-Norm. Auch ist der Abfall der Haftzugfestigkeiten nach der Nass- und Frost-Tau-Lagerung zur Haftzugfestigkeit nach Trockenlagerung etwa innerhalb des geforderten Bereiches. Da die Mindestbildetemperatur von DP A mit +10°C jedoch relativ hoch ist, eignet sich dieses Dispersionspulver alleine nicht für Anwendungen bei niedrigen Temperaturen und insbesonere nicht für den Aussenbereich. Das Dispersionspulver DP B zeigt ebenfalls gute Haftzugwerte und einen geringen Abfall der Haftzugfestigkeiten nach der Nass- und Frost-Tau-Lagerung zur Haftzugfestigkeit nach Trockenlagerung. Jedoch wird die Norm für verbesserte Offene Zeit knapp nicht erfüllt. Das Gleiche gilt für die Horizontale Deformation, welche jedoch mittels leichter Erhöhung des Dispersionspulvergehaltes angepasst werden kann. Die Korrigierbarkeit ist ebenfalls deutlich schlechter als beim erfinderischen DP 1.

### Beispiel 4:

Analog Beispiel 3 wurden Mörtelmischungen hergestellt, wobei der Gehalt der Dispersionspulverzusammensetzung geändert wurde. Der Anteil der Mörtelmischung wurde jeweils so gewählt, dass die Summe der beiden Gewichtsteile jeweils 100 ergab.

Bei einer Einsatzmenge von 10% der jeweiligen Dispersionspulver-zusammensetzung wurde ein Teil der Messungen bei einer Temperatur von 5°C wiederholt, um auch kalte Temperaturen zu simulieren.

Die Werte von Tabelle 4 zeigen klar auf, dass die Flexibilität, gemessen anhand der Horizontalen Deformation, mit steigendem Polymergehalt steigt. Es fällt auf, dass die erfinderische Dispersionspulverzusammensetzung DP 1 nach 5°C Lagerung eine sogar leicht erhöhte Flexibilität zeigt, während DP V-1 deutlich weniger flexibel wird. Weiter fällt auf, dass nach der Nasslagerung die Haftzugfestigkeiteswerte der erfinderischen Dispersionspulverzusammensetzung DP 1 mit zunehmendem Polymergehalt steigt und bei 16% Polymereinsatzmenge sogar den Trockenwert übersteigt, während DP V-1 mit Ausnahme der höchsten Polymereinsatzmenge immer etwa gleiche Haftzugfestigkeitswerte ergibt (0.72 bis 0.88 N/mm²), unabhängig vom Polymergehalt.

**Tabelle 4: Anwendungstechnische Eigenschaften einer einfachen Fliesenkleber Rezeptur mit unterschiedlichen Einsatzmengen der Dispersionspulverzusammensetzungen DP 1 und DP V-1 bei Standardbedingungen, wobei die Rezepturen mit 10 Gew.-% Dispersionspulverzusammensetzung auch bei 5°C gelagert wurden. Die Abkürzungen sind im Text erklärt.**

| **Pulvergehalt** 1) | [Gew.-%] | **4** | | **8** | | **10** | | | | **12** | | **16** | |
|---|---|---|---|---|---|---|---|---|---|---|---|---|---|
| | | | | | | | | 5°C Lagerung | | | | | |
| **Pulver** | | DP 1 | DP V-1 | DP 1 | DP V-1 | DP 1 | DP V-1 | DP 1 | DP V-1 | DP 1 | DP V-1 | DP 1 | DP V-1 |
| Anmachwassergehalt | [Gew%] | 26 | 27 | 24 | 25 | 24 | 25 | 24 | 25 | 23 | 24 | 19 | 21 |
| Anrührverhalten | | gut | gut | gut | gut | gut | gut | gut | gut | gut | gut | gut | gut |
| Haftzugfestigkeiten [N/mm²] | T; [N/mm²] | 1.22 | 1.47 | 1.54 | 2.16 | 1.84 | 2.54 | 2.24 | 1.67 | 1.92 | 2.15 | 1.87 | 1.96 |
| | N; [N/mm²] | 0.87 | 0.77 | 0.88 | 0.83 | 0.95 | 0.72 | 1.00 | 0.74 | 1.21 | 0.88 | 1.92 | 1.18 |
| | N/T; [%] | 71 | 52 | 57 | 38 | 52 | 28 | 45 | 44 | 63 | 41 | 103 | 60 |
| | FT; [N/mm²] | 0.91 | 0.87 | 1.00 | 0.98 | 0.99 | 1.01 | 2) | 2) | 1.19 | 0.89 | 1.18 | 0.14 |
| | FT/T; [%] | 75 | 59 | 65 | 52 | 54 | 40 | 2) | 2) | 62 | 41 | 63 | 7 |
| | W; [N/mm²] | 1.16 | 1.30 | 1.45 | 1.88 | 2.00 | 2.47 | 2) | 2) | 2.07 | 2.35 | 3.01 | 2.97 |
| Horiz. Deformation | [mm] | 1.92 | 2.11 | 3.15 | 3.62 | 3.94 | 4.22 | 4.53 | 2.64 | 5.37 | 5.20 | 11.85 | 8.28 |

| | | | | | | | | | | | | | |
|---|---|---|---|---|---|---|---|---|---|---|---|---|---|
| 1) Der Pulvergehalt bezieht sich auf den eingesetzten Dispersionspulvergehalt in der Trockenmörtelformulierung 2) Keine Daten vorhanden. | | | | | | | | | | | | | |

## Patentansprüche

1. In Wasser redispergierbare Dispersionspulverzusammensetzung erhältlich durch Trocknung einer wässrigen Dispersionszusammensetzung auf Basis von mindestens zwei verschiedenen wasserunlöslichen Emulsionspolymerisaten, sowie gegebenenfalls weiteren Additiven, für hochflexible, wasserfeste, hydraulisch abbindende Systeme, **dadurch gekennzeichnet, dass**
a) ein Emulsionspolymerisat A eine Glasübergangstemperatur T_{g} von 10°C bis 80°C und ein Emulsionspolymerisat B eine Glasübergangstemperatur T_{g} von -60°C bis +20°C besitzt, wobei die Glasübergangstemperatur T_{g} als midpoint Temperatur gemäss ASTM D3418-82 bestimmt wird, und die Differenz der Glasübergangs-temperaturen T_{g} der Emulsionspolymerisate A und B mindestens 5 °C beträgt, wobei das Verhältnis der Feststoffanteile von Emulsionspolymerisat A zu den Feststoffanteilen von Emulsions-polymerisat B von 95 : 5 bis 5 : 95 beträgt,
b) die Emulsionspolymerisate A und B jeweils 0 bis 70 Mol-% Vinylacetat-Monomereinheiten, bezogen auf den jeweiligen Gesamtmonomeranteil der einzelnen Emulsionspolymerisate, enthalten, und Emulsionspolymerisat A und B jeweils mittels Emulsionspolymerisation, Microemulsionspolymerisation oder inverser Emulsionspolymerisation erhalten werden,
c) die Glasübergangstemperaturen T_{g} und die Gewichtsverhältnisse der Emulsionspolymerisate A und B so eingestellt werden, dass die Mindestfilmbildetemperatur gemäss DIN 53787 der 50%-igen wässrigen Dispersionszusammensetzung 15°C oder weniger beträgt,
d) die Monomere, Stabilisierungssysteme der Emulsionspolymerisate A und B, und gegebenenfalls die weiteren Additive der Dispersionszusammensetzung so ausgewählt werden, dass die Zementverträglichkeit gewährleistet ist, wobei die Zementverträglichkeit durch das Verhältnis der Zeit bestimmt wird, die eine Mischung von 10 g Zement und 1,0 g Dispersionspulver-zusammensetzung in 190 g Wasser braucht, um in einem Messzylinder eine transparente Wasserphase von 25% des Gesamtvolumens aus Wasser, Zement und Dispersionspulver-zusammensetzung auszubilden, zur entsprechenden Zeit der gleichen Zement/ Wasser Mischung ohne Dispersionspulverzusammensetzung, wobei das Verhältnis 0.3 : 1 oder grösser ist, und wobei die Stabilisierungssysteme der Emulsionspolymerisate A und B aus einem oder mehreren Schutzkolloide ausgewählt sind; und
e) gegebenenfalls weitere Additive vor, während und/ oder nach der Trocknung zugegeben werden.

2. Verwendung der Dispersionspulverzusammensetzung nach Anspruch 1 in hochflexiblen, wasserfesten, hydraulisch abbindenden Systemen.

3. Verwendung einer wässrige Dispersionszusammensetzung auf Basis von mindestens zwei verschiedenen wasserunlöslichen Emulsionspolymerisaten, sowie gegebenenfalls weiteren Additiven, in hochflexible, wasserfesten, hydraulisch abbindenden Systemen, wobei
a) ein Emulsionspolymerisat A eine Glasübergangstemperatur T_{g} von 10°C bis 80°C und ein Emulsionspolymerisat B eine Glasübergangstemperatur T_{g} von -60°C bis +20°C besitzt, wobei die Glasübergangstemperatur T_{g} als midpoint Temperatur gemäss ASTM D3418-82 bestimmt wird, und die Differenz der Glasübergangstemperaturen T_{g} der Emulsionspolymerisate A und B mindestens 5 °C beträgt, wobei das Verhältniss der Feststoffanteile von Emulsionspolymerisat A zu den Feststoffanteilen von Emulsionspolymerisat B von 95 : 5 bis 5 : 95 beträgt,
b) die Emulsionspolymerisate A und B jeweils 0 bis 70 Mol-% Vinylacetat-Monomereinheiten, bezogen auf den jeweiligen Gesamtmonomeranteil der einzelnen Emulsionspolymerisate, enthalten, und Emulsionspolymerisat A und B jeweils mittels Emulsionspolymerisation, Microemulsionspolymerisation oder inverser Emulsionspolymerisation erhalten werden,
c) die Glasübergangstemperaturen T_{g} und die Gewichtsverhältnisse der Emulsionspolymerisate A und B so eingestellt werden, dass die Mindestfilmbildetemperatur gemäss DIN 53787 der 50%-igen wässrigen Dispersionszusammensetzung 15°C oder weniger beträgt, und
d) die Monomere, Stabilisierungssysteme der Emulsionspolymerisate A und B, und gegebenenfalls die weiteren Additive der Dispersionszusammensetzung so ausgewählt werden, dass die Zementverträglichkeit gewährleistet ist, wobei die Zementverträglichkeit durch das Verhältnis der Zeit bestimmt wird, die eine Mischung von 10 g Zement in 190 g Wasser mit 1,0 g Dispersionszusammensetzung, bezogen auf den Feststoffgehalt, braucht, um in einem Messzylinder transparente Wasserphase von 25% des Gesamtvolumens aus Wasser, Zement und Dispersionszusammensetzung auszubilden, zur entsprechenden Zeit der gleichen Zement/ Wasser Mischung ohne Dispersionszusammensetzung, wobei das Verhältnis 0.3 : 1 oder grösser ist, wobei die Stabilisierungssysteme der Emulsionspolymerisate A und B aus einem oder mehreren Schutzkolloiden ausgewählt sind.

4. Dispersionspulverzusammensetzung nach Anspruch 1, oder Verwendung nach Anspruch 2 oder 3, **dadurch gekennzeichnet, dass** das Emulsionspolymerisat A eine Glasübergangstemperatur T_{g} von 20°C bis 70°C, und das Emulsionspolymerisat B eine Glasübergangstemperatur T_{g} von -50°C bis +10°C, aufweist.

5. Dispersionspulverzusammensetzung nach Anspruch 1 oder 4, oder Verwendung nach mindestens einem der Ansprüche 2 bis 4, **dadurch gekennzeichnet, dass** das Emulsionspolymerisat A und/ oder das Emulsionspolymerisat B einen Vinylacetatgehalt von 65 Mol-% oder weniger hat und dass das Emulsionspolymerisat A und/ oder das Emulsionspolymerisat B einen Vinylacetatgehalt von 0 Mol-% oder mehr hat.

6. Dispersionspulverzusammensetzung nach mindestens einem der Ansprüche 1, 4 und 5, oder Verwendung nach mindestens einem der Ansprüche 2 bis 5, **dadurch gekennzeichnet, dass** die Differenz der Glasübergangstemperaturen T_{g} der Emulsionspolymerisate A und B mindestens 10 °C beträgt und die Glasübergangstemperaturen T_{g} und die Verhältnisse der Emulsionspolymerisate so eingestellt werden, dass die Mindestfilmbildetemperatur 10°C oder weniger beträgt.

7. Dispersionspulverzusammensetzung nach mindestens einem der Ansprüche 1 und 4 bis 6, oder Verwendung nach mindestens einem der Ansprüche 2 bis 6, **dadurch gekennzeichnet, dass** das Emulsions-polymerisat A und/ oder das Emulsionspolymerisat B Copolymerisate sind auf Basis von C₁- bis C₂₀- Vinylestern, Ethylen, Vinylchlorid, C₁- bis C₂₀- Alkylestern der (Meth)Acrylsäure und/ oder (Meth)Acrylamid, Acrylnitril, Styrol, Styrol-Derivaten und/ oder Butadien.

8. Dispersionspulverzusammensetzung nach mindestens einem der Ansprüche 1 und 4 bis 7, oder Verwendung nach mindestens einem der Ansprüche 2 bis 7, **dadurch gekennzeichnet, dass** das Emulsionspolymerisat A und/ oder das Emulsionspolymerisat B Copolymerisate sind auf Basis von Ethylen-Vinylacetat, Ethylen-Vinylacetat-Vinylversatat, Ethylen-Vinylacetat-(Meth)Acrylat, Ethylen-Vinylacetat-Vinylchlorid, Vinylacetat-Vinylversatat, Vinylacetat-Vinylversatat-(Meth)acrylat, Rein(Meth)Acrylat, Styrol-Acrylat und/ oder Styrol-Butadien, wobei Vinylversatat ein C₄- bis C₁₂- Vinylester ist, und die Copolymerisate 0 - 50 Gew-% weitere Comonomere enthalten können.

9. Dispersionspulverzusammensetzung nach mindestens einem der Ansprüche 1 und 4 bis 8, oder Verwendung nach mindestens einem der Ansprüche 2 bis 8, **dadurch gekennzeichnet, dass** das Emulsionspolymerisat A 2 bis 80 Gew.-% (Meth)acrylatmonomer enthält und dass der Anteil an funktionellen Comonomeren in dem Emulsionspolymerisat A und/ oder Emulsionspolymerisat B 0 bis 30 Gew.-% beträgt.

10. Dispersionspulverzusammensetzung oder Verwendung nach Anspruch 8 oder 9, **dadurch gekennzeichnet, dass** die funktionellen Monomere Alkoxysilan-, Glycidyl-, Epihalohydrin-, Carboxyl-, Amin-, Hydroxyl-, Ammonium-, und/ oder Sulfonsäuregruppen enthalten.

11. Dispersionspulverzusammensetzung nach mindestens einem der Ansprüche 1 und 4 bis 10, oder Verwendung nach mindestens einem der Ansprüche 2 bis 10, **dadurch gekennzeichnet, dass** das Emulsionspolymerisat A mindestens ein Monomer enthält, dessen Homopolymerisat eine Glasübergangstemperatur T_{g} von grösser als 40°C besitzt, und welches zu mindestens 2 Mol-% im Emulsionspolymerisat A enthalten ist.

12. Dispersionspulverzusammensetzung nach mindestens einem der Ansprüche 1 und 4 bis 11, oder Verwendung nach mindestens einem der Ansprüche 2 bis 11, **dadurch gekennzeichnet, dass** die Stabilisierungssysteme der Emulsionspolymerisate A und B ausgewählt aus ein oder mehrere Polyvinylpyrrolidone, Polysaccharidether, teilverseifte und/ oder modifizierte teilverseifte Polyvinylalkohole mit einem Hydrolysegrad von 80 bis 99 Mol-% und einer Höpplerviskosität in 4%iger wässriger Lösung von 1 bis 50 mPas (gemessen bei 20°C nach DIN 53015) sind.

13. Dispersionspulverzusammensetzung nach mindestens einem der Ansprüche 1 und 4 bis 12, oder Verwendung nach mindestens einem der Ansprüche 2 bis 12, **dadurch gekennzeichnet, dass** das Emulsionspolymerisat A und/ oder das Emulsionspolymerisat B mit einem ionischen Polymerisat stabilisiert ist, welches über radikalische (Co)polymerisation von olefinischen Monomeren erhalten worden ist, wobei zumindest ein Teil der olefinischen Monomeren eine ionische Gruppe enthält.

14. Dispersionspulverzusammensetzung nach mindestens einem der Ansprüche 1 und 4 bis 13, oder Verwendung nach mindestens einem der Ansprüche 2 bis 13, **dadurch gekennzeichnet, dass** das Emulsionspolymerisat A und/ oder das Emulsionspolymerisat B eine heterogene Morphologie aufweisen.

15. Dispersionspulverzusammensetzung nach mindestens einem der Ansprüche 1 und 4 bis 14, oder Verwendung nach mindestens einem der Ansprüche 2 bis 14, **dadurch gekennzeichnet, dass** das Verhältnis der Feststoffanteile des Emulsionspolymerisates A zu den Feststoffanteilen des Emulsionspolymerisates B von 80: 20 bis 20 : 80 beträgt.

16. Dispersionspulverzusammensetzung nach mindestens einem der Ansprüche 1 und 4 bis 15, oder Verwendung nach mindestens einem der Ansprüche 2 bis 15, **dadurch gekennzeichnet, dass** die wässrige Dispersionszusammensetzung einen Anteil an organischen flüchtigen Komponenten (VOC) von weniger als etwa 2000 ppm bezogen auf den Copolymerisatgehalt, aufweist und dass der Anteil an Filmbildehilfsmittel 0 bis 5 Gew.-% bezogen auf den Polymerisatgehalt, beträgt.

17. Dispersionspulverzusammensetzung nach mindestens einem der Ansprüche 1 und 4 bis 16, oder Verwendung nach mindestens einem der Ansprüche 2 bis 16, **dadurch gekennzeichnet, dass** die weiteren Additive Polyvinylalkohol, Polyvinylpyrrolidon, Entschäumer, Netzmittel, Polysaccharidether wie Celluloseether, Stärkeether und/ oder Guarether, Cellulosefasern, Dispergiermittel, Zementverflüssiger, Abbindebeschleuniger, Abbindeverzögerer, Luftporenbildner, Polycarboxylatether, Polyacrylamide, Hydrophobierungsmittel, Verdickungsmittel, Füllstoffe, wie Carbonate, Silikate, Metakaoline, und/ oder latenthydraulische Komponenten sind, wobei der Anteil der weiteren Additive, bezogen auf den Polymerisatanteil, 0.01 bis 100 Gew-% beträgt.

18. Dispersionspulverzusammensetzung nach mindestens einem der Ansprüche 1 und 4 bis 17, **dadurch gekennzeichnet, dass** das Emulsionspolymerisat A und das Emulsionspolymerisat B getrennt oder gemeinsam getrocknet werden.

19. Dispersionspulverzusammensetzung nach Anspruch 18, **dadurch gekennzeichnet, dass** die Trocknung mittels Sprühtrocknung, Gefriertrocknung, Fliessbetttrocknung, Walzentrocknung und/ oder Schnelltrocknung erfolgt.

20. Dispersionspulverzusammensetzung nach mindestens einem der Ansprüche 1 und 4 bis 19, **dadurch gekennzeichnet, dass** dem Emulsionspolymerisat A und/ oder dem Emulsionspolymerisat B vor und/ oder nach der Trocknung ein oder mehrere wasserlösliche Polymerisate in einer Menge von 0.1 bis 50 Gew-% bezogen auf den Feststoffgehalt der zu trocknenden Emulsionspolymerisate, zugegeben werden.

21. Dispersionspulverzusammensetzung nach mindestens einem der Ansprüche 1 und/ oder 4 bis 20, **dadurch gekennzeichnet, dass** das wasserlösliche Polymerisat ein oder mehrere Polyvinylpyrrolidone, Polysaccharidether, Dextrine und/ oder teilverseifte Polyvinylalkohole und/ oder modifizierte teilverseifte Polyvinylalkohole mit einem Hydrolysegrad von 80 bis 100 Mol-% und einer Höpplerviskosität in 4%iger wässriger Lösung von 1 bis 50 mPas (gemessen bei 20°C, DIN 53015) ist.

22. Verwendung nach mindestens einem der Ansprüche 2 bis 17, in hydraulisch abbindenden Gips- und/ oder zementären Mörteln, wobei dem Trockenmörtel Einsatzmengen von 0.1 bis 100 Gew-% bezogen auf den Polymerisatgehalt der Dispersions- und/ oder Dispersionspulver-zusammensetzung zugegeben werden.

23. Verwendung nach Anspruch 22, **dadurch gekennzeichnet, dass** a) das Emulsionspolymerisat A und das Emulsionspolymerisat B als wässrige Dispersionszusammensetzung oder einzeln als wässrige Dispersionen dem Mörtel zugegeben werden, b) die Dispersionspulverzusammensetzung als gemeinsam gesprühtes Dispersionspulver, als Dispersionspulvergemisch oder in Form von mindestens zwei verschiedenen Dispersionspulvern, basierend auf nur einem Emulsionspolymerisat A oder B, dem Mörtel zugegeben werden, oder c) dass mindestens ein Dispersionspulver, basierend auf dem Emulsionspolymerisat A oder B, und mindestens eine Dispersion, basierend auf dem Emulsionspolymerisat B oder A, dem Mörtel zugegeben werden.

24. Verwendung nach mindestens einem der Ansprüche 2 bis 23 in Fliesenklebern, Vollwärmeschutzmörtel, Nivelliermassen, Reparaturmörteln, Gips- und/ oder Kalk-und/ oder Zement- Putzen, Fugenmörteln, Dichtungsschlämmen, Spachtelmassen, Tapetenkleister, Parkettklebstoffen, Klebstoffen, Pulverfarben.

25. Hydraulisch abbindender Gips- und/oder zementärer Mörtel, der eine Dispersionspulverzusammensetzung nach mindestens einem der Ansprüche 1 und 4 bis 21 enthält, wobei dem Trockenmörtel Einsatzmengen von 0.1 bis 100 Gew-% bezogen auf den Polymerisatgehalt der Dispersionspulverzusammensetzung zugegeben werden.

26. Fliesenkleber, Vollwärmeschutzmörtel, Nivelliermasse, Reparaturmörtel, Gips- und/ oder Kalk- und/ oder Zement- Putz, Fugenmörtel, Dichtungsschlämme, Spachtelmasse, Tapetenkleister, Parkettklebstoff, Klebstoff oder Pulverfarbe, die eine Dispersionspulverzusammensetzung nach mindestens einem der Ansprüche 1 und 4 bis 21 enthalten.

## Claims

1. Water-redispersible dispersion powder composition obtainable by drying an aqueous dispersion composition based on at least two different water-insoluble emulsion polymers, and optionally further additives, for ultraflexible, water-tight, hydraulically setting systems, **characterized in that**
a) an emulsion polymer A has a glass transition temperature T_{g} of 10°C to 80°C and an emulsion polymer B has a glass transition temperature T_{g} of -60°C to +20°C, with the glass transition temperature T_{g} being determined as midpoint temperature according to ASTM D3418-82, and the difference between the glass transition temperatures T_{g} of emulsion polymers A and B being at least 5°C, with the ratio of the solids content of emulsion polymer A to the solids content of emulsion polymer B being 95 : 5 to 5 : 95,
b) the emulsion polymers A and B each contain 0 to 70 mol% vinyl acetate monomer units, based on the respective total monomer content of the individual emulsion polymers, and emulsion polymers A and B are each obtained by means of emulsion polymerization, microemulsion polymerization or inverse emulsion polymerization,
c) the glass transition temperatures T_{g} and the weight ratios of emulsion polymers A and B are set such that the lowest film-forming temperature according to DIN 53787 of the 50% aqueous dispersion composition is 15°C or less,
d) the monomers, stabilizing systems of emulsion polymers A and B, and optionally the further additives of the dispersion composition are selected such that the cement compatibility is guaranteed, with the cement compatibility being determined through the ratio of the time which a mixture of 10 g cement and 1.0 g dispersion powder composition in 190 g water needs to form a transparent water phase of 25% of the total volume of water, cement and dispersion powder composition in a measuring cylinder, to the corresponding time of the same cement/water mixture without dispersion powder composition, with the ratio being 0.3 : 1 or higher, and wherein the stabilizing systems of emulsion polymers A and B are selected from one or more protective colloids; and
e) optionally further additives are added before, during and/or after the drying.

2. Use of the dispersion powder composition according to claim 1 in ultraflexible, water-tight, hydraulically setting systems.

3. Use of an aqueous dispersion composition based on at least two different water-insoluble emulsion polymers, and optionally further additives, in ultraflexible, water-tight, hydraulically setting systems, wherein
a) an emulsion polymer A has a glass transition temperature T_{g} of 10°C to 80°C and an emulsion polymer B has a glass transition temperature T_{g} of -60°C to +20°C, with the glass transition temperature T_{g} being determined as midpoint temperature according to ASTM D3418-82, and the difference between the glass transition temperatures T_{g} of emulsion polymers A and B being at least 5°C, with the ratio of the solids content of emulsion polymer A to the solids content of emulsion polymer B being 95 : 5 to 5 : 95,
b) the emulsion polymers A and B each contain 0 to 70 mol% vinyl acetate monomer units, based on the respective total monomer content of the individual emulsion polymers, and emulsion polymers A and B are each obtained by means of emulsion polymerization, microemulsion polymerization or inverse emulsion polymerization,
c) the glass transition temperatures T_{g} and the weight ratios of emulsion polymers A and B are set such that the lowest film-forming temperature according to DIN 53787 of the 50% aqueous dispersion composition is 15°C or less, and
d) the monomers, stabilizing systems of emulsion polymers A and B, and optionally the further additives of the dispersion composition are selected such that the cement compatibility is guaranteed, with the cement compatibility being determined through the ratio of the time which a mixture of 10 g cement in 190 g water with 1.0 g dispersion composition, based on the solids content, needs to form a transparent water phase of 25% of the total volume of water, cement and dispersion composition in a measuring cylinder, to the corresponding time for the same cement/water mixture without dispersion composition, with the ratio being 0.3 : 1 or higher, wherein the stabilizing systems of emulsion polymers A and B are selected from one or more protective colloids.

4. Dispersion powder composition according to claim 1, or use according to claim 2 or 3, **characterized in that** emulsion polymer A has a glass transition temperature T_{g} of 20°C to 70°C, and emulsion polymer B has a glass transition temperature T_{g} of -50°C to +10°C.

5. Dispersion powder composition according to claim 1 or 4, or use according to at least one of claims 2 to 4, **characterized in that** emulsion polymer A and/or emulsion polymer B have a vinyl acetate content of 65 mol% or less and that emulsion polymer A and/or emulsion polymer B have a vinyl acetate content of 0 mol% or more.

6. Dispersion powder composition according to at least one of claims 1, 4 and 5, or use according to at least one of claims 2 to 5, **characterized in that** the difference between the glass transition temperatures T_{g} of emulsion polymers A and B is at least 10°C and the glass transition temperatures T_{g} and the ratios of the emulsion polymers are set such that the lowest film-forming temperature is 10°C or less.

7. Dispersion powder composition according to at least one of claims 1 and 4 to 6, or use according to at least one of claims 2 to 6, **characterized in that** emulsion polymer A and/or emulsion polymer B are copolymers based on C₁ to C₂₀-vinyl esters, ethylene, vinyl chloride, C₁ to C₂₀-alkyl esters of (meth)acrylic acid and/or (meth)acrylamide, acrylonitrile, styrene, styrene derivatives and/or butadiene.

8. Dispersion powder composition according to at least one of claims 1 and 4 to 7, or use according to at least one of claims 2 to 7, **characterized in that** emulsion polymer A and/or emulsion polymer B are copolymers based on ethylene-vinyl acetate, ethylene-vinyl acetate-vinyl versatate, ethylene-vinyl acetate-(meth)acrylate, ethylene-vinyl acetate-vinyl chloride, vinyl acetate-vinyl versatate, vinyl acetate-vinyl versatate-(meth)acrylate, pure (meth)acrylate, styrene-acrylate and/or styrene-butadiene, wherein vinyl versatate is a C₄ to C₁₂-vinyl ester, and the copolymers can contain 0 - 50 wt.% of further comonomers.

9. Dispersion powder composition according to at least one of claims 1 and 4 to 8, or use according to at least one of claims 2 to 8, **characterized in that** emulsion polymer A contains 2 to 80 wt.% of (meth)acrylate monomer and that the share of functional comonomers in emulsion polymer A and/or emulsion polymer B is 0 to 30 wt.%.

10. Dispersion powder composition or use according to claim 8 or 9, **characterized in that** the functional monomers contain alkoxysilane, glycidyl, epihalohydrin, carboxyl, amine, hydroxyl, ammonium and/or sulfonic acid groups.

11. Dispersion powder composition according to at least one of claims 1 and 4 to 10, or use according to at least one of claims 2 to 10, **characterized in that** emulsion polymer A contains at least one monomer of which the homopolymer has a glass transition temperature T_{g} of higher than 40°C and which is contained in emulsion polymer A up to at least 2 mol%.

12. Dispersion powder composition according to at least one of claims 1 and 4 to 11, or use according to at least one of claims 2 to 11, **characterized in that** the stabilizing systems of emulsion polymers A and B are selected from one or more polyvinyl pyrrolidones, polysaccharide ethers, partly saponified and/or modified partly saponified polyvinyl alcohols with a degree of hydrolysis of 80 to 99 mol% and a Höppler viscosity in 4% aqueous solution of 1 to 50 mPas (measured at 20°C according to DIN 53015).

13. Dispersion powder composition according to at least one of claims 1 and 4 to 12, or use according to at least one of claims 2 to 12, **characterized in that** emulsion polymer A and/or emulsion polymer B are stabilized with an ionic polymer which has been obtained via radical (co)polymerization of olefinic monomers, with at least part of the olefinic monomers containing an ionic group.

14. Dispersion powder composition according to at least one of claims 1 and 4 to 13, or use according to at least one of claims 2 to 13, **characterized in that** emulsion polymer A and/or emulsion polymer B have a heterogeneous morphology.

15. Dispersion powder composition according to at least one of claims 1 and 4 to 14, or use according to at least one of claims 2 to 14, **characterized in that** the ratio of the solids content of emulsion polymer A to the solids content of emulsion polymer B is 80 : 20 to 20 : 80.

16. Dispersion powder composition according to at least one of claims 1 and 4 to 15, or use according to at least one of claims 2 to 15, **characterized in that** the aqueous dispersion composition has a share of volatile organic components (VOC) of less than about 2,000 ppm, based on the copolymer content, and that the share of film-forming aids is 0 to 5 wt.%, based on the polymer content.

17. Dispersion powder composition according to at least one of claims 1 and 4 to 16, or use according to at least one of claims 2 to 16, **characterized in that** the further additives are polyvinyl alcohol, polyvinyl pyrrolidone, antifoaming agents, wetting agents, polysaccharide ethers such as cellulose ethers, starch ethers and/or guar ethers, cellulose fibers, dispersing agents, cement plasticizers, setting accelerators, setting retarders, air-entraining agents, polycarboxylate ethers, polyacrylamides, water-repellent agents, thickeners, fillers, such as carbonates, silicates, metakaolins and/or latent-hydraulic components, with the share of further additives, based on the polymer share, being 0.01 to 100 wt.%.

18. Dispersion powder composition according to at least one of claims 1 and 4 to 17, **characterized in that** emulsion polymer A and emulsion polymer B are dried separately or together.

19. Dispersion powder composition according to claim 18, **characterized in that** drying takes place by means of spray-drying, freeze-drying, fluid bed drying, drum drying and/or rapid drying.

20. Dispersion powder composition according to at least one of claims 1 and 4 to 19, **characterized in that** before and/or after drying one or more water-soluble polymers are added to emulsion polymer A and/or emulsion polymer B in a quantity of 0.1 to 50 wt.%, based on the solids content of the emulsion polymers to be dried.

21. Dispersion powder composition according to at least one of claims 1 and/or 4 to 20, **characterized in that** the water-soluble polymer is one or more polyvinyl pyrrolidones, polysaccharide ethers, dextrins and/or partly saponified polyvinyl alcohols and/or modified partly saponified polyvinyl alcohols with a degree of hydrolysis of 80 to 100 mol% and a Höppler viscosity in 4% aqueous solution of 1 to 50 mPas (measured at 20°C, DIN 53015).

22. Use according to at least one of claims 2 to 17 in hydraulically setting gypsum and/or cementitious mortars, wherein application quantities of 0.1 to 100 wt.%, based on the polymer content of the dispersion and/or dispersion powder composition, are added to the dry mortar.

23. Use according to claim 22, **characterized in that** a) emulsion polymer A and emulsion polymer B are added to the mortar as an aqueous dispersion composition or individually as aqueous dispersions, b) the dispersion powder composition is added to the mortar as a jointly sprayed dispersion powder, as a dispersion powder mixture or in the form of at least two different dispersion powders, being based on only one emulsion polymer A or B, or c) that at least one dispersion powder, being based on emulsion polymer A or B, and at least one dispersion, being based on emulsion polymer B or A, are added to the mortar.

24. Use according to at least one of claims 2 to 23 in ceramic tile adhesives, thermal insulation mortars, smoothing compounds, repair mortars, gypsum and/or lime and/or cement plasters, tile grouts, sealing compounds, troweling compounds, wallpaper pastes, parquet adhesives, adhesives, powder coatings.

25. Hydraulically setting gypsum and/or cementitious mortar which contains a dispersion powder composition according to at least one of claims 1 and 4 to 21, wherein application quantities of 0.1 to 100 wt.%, based on the polymer content of the dispersion powder composition, are added to the dry mortar.

26. Ceramic tile adhesive, thermal insulation mortar, smoothing compound, repair mortar, gypsum and/or lime and/or cement plaster, tile grout, sealing compound, troweling compound, wallpaper paste, parquet adhesive, adhesive, or powder coating containing a dispersion powder composition according to at least one of claims 1 and 4 to 21.

## Revendications

1. Composition pulvérulente de dispersion redispersible dans l'eau, pouvant être obtenue par séchage d'une composition de dispersion aqueuse à base d'au moins deux polymères en émulsion différents, insolubles dans l'eau, et éventuellement d'autres additifs, pour des systèmes à prise hydraulique, très flexibles, résistants à l'eau, **caractérisée en ce que**
a) un polymère en émulsion A possède une température de transition vitreuse T_{g} de 10 °C à 80 °C et un polymère en émulsion B possède une température de transition vitreuse T_{g} de -60 °C à +20 °C, dans laquelle la température de transition vitreuse T_{g} est déterminée comme température médiane selon la norme ASTM D3418-82, et la différence des températures de transition vitreuse T_{g} des polymères en émulsion A et B est d'au moins 5 °C, dans laquelle le rapport de la teneur en solide du polymère en émulsion A à la teneur en solide du polymère en émulsion B est de 95 : 5 à 5 : 95,
b) les polymères en émulsion A et B contiennent respectivement 0 à 70 % en mole de motifs monomères d'acétate de vinyle, par rapport à la teneur en monomère totale respective des polymères en émulsion individuels, et les polymères en émulsion A et B sont obtenus respectivement au moyen d'une polymérisation en émulsion, d'une polymérisation en micro-émulsion ou d'une polymérisation en émulsion inverse,
c) les températures de transition vitreuse T_{g} et les rapports en poids des polymères en émulsion A et B sont ajustés de telle sorte que la température filmogène minimale selon la norme DIN 53787 de 50 % de la composition en dispersion aqueuse soit de 15 °C ou inférieure,
d) les monomères, les systèmes de stabilisation des polymères en émulsion A et B, et éventuellement les autres additifs de la composition de dispersion sont choisis de telle sorte que la compatibilité avec le ciment soit assurée, dans laquelle la compatibilité avec le ciment est déterminée par le rapport du temps que nécessite un mélange de 10 g de ciment et 1,0 g de composition pulvérulente de dispersion dans 190 g d'eau pour former dans un cylindre de mesure, une phase aqueuse transparente de 25 % du volume total constitué d'eau, de ciment et de composition pulvérulente de dispersion, par rapport au temps correspondant du même mélange ciment/eau sans composition pulvérulente de dispersion, dans laquelle le rapport est de 0,3 : 1 ou supérieur, et dans laquelle les systèmes de stabilisation des polymères en émulsion A et B sont choisis parmi un ou plusieurs colloïdes protecteurs ; et
e) éventuellement d'autres additifs sont ajoutés avant, pendant et/ou après le séchage.

2. Utilisation de la composition pulvérulente de dispersion selon la revendication 1 dans des systèmes à prise hydraulique très flexibles, résistants à l'eau.

3. Utilisation d'une composition de dispersion aqueuse à base d'au moins deux polymères en émulsion différents insolubles dans l'eau, et éventuellement d'autres additifs, dans des systèmes à prise hydraulique très flexibles, résistants à l'eau, dans laquelle
a) un polymère en émulsion A possède une température de transition vitreuse T_{g} de 10 °C à 80 °C et un polymère en émulsion B possède une température de transition vitreuse T_{g} de -60 °C à +20 °C, dans laquelle la température de transition vitreuse T_{g} est déterminée comme température médiane selon la norme ASTM D3418-82, et la différence des températures de transition vitreuse T_{g} des polymères en émulsion A et B est d'au moins 5 °C, dans laquelle le rapport de la teneur en solide du polymère en émulsion A à la teneur en solide du polymère en émulsion B est de 95 : 5 à 5 : 95,
b) les polymères en émulsion A et B contiennent respectivement 0 à 70 % en mole de motifs monomères d'acétate de vinyle, par rapport à la teneur en monomère totale respective des polymères en émulsion individuels, et les polymères en émulsion A et B sont obtenus respectivement au moyen d'une polymérisation en émulsion, d'une polymérisation en micro-émulsion ou d'une polymérisation en émulsion inverse,
c) les températures de transition vitreuse T_{g} et les rapports en poids des polymères en émulsion A et B sont ajustés de telle sorte que la température filmogène minimale selon la norme DIN 53787 de 50 % de la composition en dispersion aqueuse soit de 15 °C ou inférieure, et
d) les monomères, les systèmes de stabilisation des polymères en émulsion A et B, et éventuellement les autres additifs de la composition de dispersion sont choisis de telle sorte que la compatibilité avec le ciment soit assurée, dans laquelle la compatibilité avec le ciment est déterminée par le rapport du temps que nécessite un mélange de 10 g de ciment dans 190 g d'eau avec 1,0 g de composition de dispersion, par rapport à la teneur en solide, pour former dans un cylindre de mesure, une phase aqueuse transparente de 25 % du volume total constitué d'eau, de ciment et de composition de dispersion, par rapport au temps correspondant du même mélange ciment/eau sans composition de dispersion, dans laquelle le rapport est de 0,3 : 1 ou supérieur, dans laquelle les systèmes de stabilisation des polymères en émulsion A et B sont choisis parmi un ou plusieurs colloïdes protecteurs.

4. Composition pulvérulente de dispersion selon la revendication 1, ou utilisation selon la revendication 2 ou 3, **caractérisée en ce que** le polymère en émulsion A présente une température de transition vitreuse T_{g} de 20 °C à 70 °C, et le polymère en émulsion B présente une température de transition vitreuse T_{g} de -50 °C à +10 °C.

5. Composition pulvérulente de dispersion selon la revendication 1 ou 4, ou utilisation selon au moins l'une des revendications 2 à 4, **caractérisée en ce que** le polymère en émulsion A et/ou le polymère en émulsion B a une teneur en acétate de vinyle de 65 % en mole ou inférieure, et **en ce que** le polymère en émulsion A et/ou le polymère en émulsion B a une teneur en acétate de vinyle de 0 % en mole ou supérieure.

6. Composition pulvérulente de dispersion selon au moins l'une des revendications 1, 4 et 5, ou utilisation selon au moins l'une des revendications 2 à 5, **caractérisée en ce que** la différence des températures de transition vitreuse T_{g} des polymères en émulsion A et B est d'au moins 10 °C et les températures de transition vitreuse T_{g} et les rapports des polymères en émulsion sont ajustés de telle sorte que la température filmogène minimale soit de 10 ° ou inférieure.

7. Composition pulvérulente de dispersion selon au moins l'une des revendications 1 et 4 à 6, ou utilisation selon au moins l'une des revendications 2 à 6, **caractérisée en ce que** le polymère en émulsion A et/ou le polymère en émulsion B sont des copolymères à base d'esters de vinyle en C₁ à C₂₀, d'éthylène, de chlorure de vinyle, d'esters d'alkyle en C₁ à C₂₀ de l'acide (méth)acrylique et/ou de (méth)acrylamide, d'acrylonitrile, de styrène, de dérivés de styrènes et/ou de butadiène.

8. Composition pulvérulente de dispersion selon au moins l'une des revendications 1 et 4 à 7, ou utilisation selon au moins l'une des revendications 2 à 7, **caractérisée en ce que** le polymère en émulsion A et/ou le polymère en émulsion B sont des copolymères à base d'éthylène-acétate de vinyle, d'éthylène-acétate de vinyle-versatate de vinyle, d'éthylène-acétate de vinyle-(méth)acrylate, d'éthylène-acétate de vinyle-chlorure de vinyle, d'acétate de vinyle-versatate de vinyle, d'acétate de vinyle-versatate de vinyle-(méth)acrylate, de (méth)acrylate pur, de styrène-acrylate et/ou de styrène-butadiène, dans laquelle le versatate de vinyle est un ester de vinyle en C₄ à C₁₂, et les copolymères peuvent contenir 0 à 50 % en poids d'autres comonomères.

9. Composition pulvérulente de dispersion selon au moins l'une des revendications 1 et 4 à 8, ou utilisation selon au moins l'une des revendications 2 à 8, **caractérisée en ce que** le polymère en émulsion A contient 2 à 80 % en poids de monomère de (méth)acrylate et la teneur en comonomères fonctionnels dans le polymère en émulsion A et/ou le polymère en émulsion B est de 0 à 30 % en poids.

10. Composition pulvérulente de dispersion ou utilisation selon la revendication 8 ou 9, **caractérisée en ce que** les monomères fonctionnels contiennent des groupes alcoxysilane, glycidyle, épihalohydrine, carboxyle, amino, hydroxyle, ammonium et/ou acide sulfonique.

11. Composition pulvérulente de dispersion selon au moins l'une des revendications 1 et 4 à 10, ou utilisation selon au moins l'une des revendications 2 à 10, **caractérisée en ce que** le polymère en émulsion A contient au moins un monomère, dont l'homopolymère possède une température de transition vitreuse T_{g} supérieure à 40 °C, et qui est contenu à hauteur d'au moins 2 % en mole dans le polymère en émulsion A.

12. Composition pulvérulente de dispersion selon au moins l'une des revendications 1 et 4 à 11, ou utilisation selon au moins l'une des revendications 2 à 11, **caractérisée en ce que** les systèmes de stabilisation des polymères en émulsion A et B sont choisis parmi un ou plusieurs polyvinylpyrrolidones, éthers de polysaccharide, alcools polyvinyliques partiellement saponifiés et/ou partiellement saponifiés modifiés ayant un degré d'hydrolyse de 80 à 99 % en mole et une viscosité de Höppler dans une solution aqueuse à 4 % de 1 à 50 mPas (mesurée à 20 °C selon la norme DIN 53015).

13. Composition pulvérulente de dispersion selon au moins l'une des revendications 1 et 4 à 12, ou utilisation selon au moins l'une des revendications 2 à 12, **caractérisée en ce que** le polymère en émulsion A et/ou le polymère en émulsion B est stabilisé avec un polymère ionique qui a été obtenu par (co)polymérisation radicalaire de monomères oléfiniques, dans laquelle au moins une partie des monomères oléfiniques contient un groupe ionique.

14. Composition pulvérulente de dispersion selon au moins l'une des revendications 1 et 4 à 13, ou utilisation selon au moins l'une des revendications 2 à 13, **caractérisée en ce que** le polymère en émulsion A et/ou le polymère en émulsion B présentent une morphologie hétérogène.

15. Composition pulvérulente de dispersion selon au moins l'une des revendications 1 et 4 à 14, ou utilisation selon au moins l'une des revendications 2 à 14, **caractérisée en ce que** le rapport de la teneur en solide du polymère en émulsion A à la teneur en solide du polymère en émulsion B est de 80 : 20 à 20 : 80.

16. Composition pulvérulente de dispersion selon au moins l'une des revendications 1 et 4 à 15, ou utilisation selon au moins l'une des revendications 2 à 15, **caractérisée en ce que** la composition de dispersion aqueuse présente une fraction de composants organiques volatils (COV) inférieure à environ 2000 ppm par rapport à la teneur en copolymère et **en ce que** la fraction d'auxiliaire filmogène est de 0 à 5 % en poids par rapport à la teneur en polymère.

17. Composition pulvérulente de dispersion selon au moins l'une des revendications 1 et 4 à 16, ou utilisation selon au moins l'une des revendications 2 à 16, **caractérisée en ce que** les autres additifs sont l'alcool de polyvinyle, la polyvinylpyrrolidone, un agent anti-mousse, un agent de réticulation, un éther de polysaccharide tel qu'un éther de cellulose, un éther d'amidon et/ou un éther de guar, des fibres de cellulose, un agent de dispersion, un fluidificateur du ciment, un accélérateur de prise, un retardateur de prise, un agent porogène, un éther de polycarboxyle, des polyacrylamides, un agent d'hydrophobisation, un agent épaississant, des agents de charge tels que carbonates, silicates, métakaolin, et/ou des composants de latence hydraulique, dans laquelle la fraction d'autres additifs, par rapport à la fraction de polymère est de 0,01 à 100 % en poids.

18. Composition pulvérulente de dispersion selon au moins l'une des revendications 1 et 4 à 17, **caractérisée en ce que** le polymère en émulsion A et le polymère en émulsion B sont séchés séparément ou conjointement.

19. Composition pulvérulente de dispersion selon la revendication 18, **caractérisée en ce que** le séchage s'effectue au moyen du séchage par pulvérisation, de la lyophilisation, du séchage en lit fluidisé, du séchage sur cylindre et/ou du séchage rapide.

20. Composition pulvérulente de dispersion selon au moins l'une des revendications 1 et 4 à 19, **caractérisée en ce que** l'on ajoute au polymère en émulsion A et/ou au polymère en émulsion B avant et/ou après séchage, un ou plusieurs polymères solubles dans l'eau en une quantité de 0,1 à 50 % en poids à la teneur en solide des polymères en émulsion à sécher.

21. Composition pulvérulente de dispersion selon au moins l'une des revendications 1 et/ou 4 à 20, **caractérisée en ce que** le polymère soluble dans l'eau est un(e) ou plusieurs polyvinylpyrrolidones, éthers de polysaccharide, dextrines et/ou alcools polyvinyliques partiellement saponifiés et/ou alcools polyvinyliques partiellement saponifiés modifiés comportant un degré d'hydrolyse de 80 à 100 % en mole et une viscosité de Höppler dans une solution aqueuse à 4 % de 1 à 50 mPas (mesurée à 20 °C, norme DIN 53015).

22. Utilisation selon au moins l'une des revendications 2 à 17, dans des mortiers de gypse et/ou cimentaires à prise hydraulique, dans laquelle on ajoute au mortier sec, des quantités d'utilisation de 0,1 à 100 % en poids par rapport à la teneur en polymère de la composition de dispersion et/ou de la composition pulvérulente de dispersion.

23. Utilisation selon la revendication 22, **caractérisée en ce que** a) le polymère en émulsion A et le polymère en émulsion B sont ajoutés au mortier en tant que composition de dispersion aqueuse ou individuellement en tant que dispersions aqueuses, b) la composition pulvérulente de dispersion est ajoutée au mortier en tant que poudre de dispersion pulvérisée conjointement, en tant que mélange pulvérulent de dispersion ou sous la forme d'au moins deux poudres de dispersion différentes, sur la base d'uniquement un polymère en émulsion A ou B, ou c) **en ce qu'**au moins une poudre de dispersion, sur la base du polymère en émulsion A ou B et au moins une dispersion, sur la base du polymère en émulsion B ou A, sont ajoutées au mortier.

24. Utilisation selon au moins l'une des revendications 2 à 23, dans des colles à carrelage, des mortiers d'isolation thermique, des masses de nivellement, des mortiers de réparation, des crépis de gypse et/ou de chaux et/ou de ciment, des coulis, des pâtes d'étanchéité, des mastics, des colles pour papier peint, des colles de parquet, des adhésifs, des peintures en poudre.

25. Mortier de gypse et/ou cimentaire à prise hydraulique qui contient une composition pulvérulente de dispersion selon au moins l'une des revendications 1 à 4 à 21, dans lequel on ajoute au mortier sec, des quantités d'utilisation de 0,1 à 100 % en poids par rapport à la teneur en polymère de la composition pulvérulente de dispersion.

26. Colles à carrelage, mortiers d'isolation thermique, masses de nivellement, mortiers de réparation, crépis de gypse et/ou de chaux et/ou de ciment, coulis, pâtes d'étanchéité, mastics, colles pour papier peint, colles de parquet, adhésifs ou peintures en poudre qui contiennent une composition pulvérulente de dispersion selon au moins l'une des revendications 1 et 4 à 21.
